# EUROPEAN PATENT SPECIFICATION

(11) **EP 2 962 556 B1**
(45) Date of publication and mention of the grant of the patent: **24.10.2018**
(21) Application number: 15174261.6
(22) Date of filing: 29.06.2015
(51) Int. Cl.: A61D 3/00, A01K 61/13, A01K 61/95

(54) **A SYSTEM AND METHOD FOR MONITORING AND CONTROL OF ECTOPARASITES OF FISH**
SYSTEM UND VERFAHREN ZUR ÜBERWACHUNG UND KONTROLLE VON EKTOPARASITEN BEI FISCH
SYSTÈME ET PROCÉDÉ DE SURVEILLANCE ET DE LUTTE CONTRE DES ECTOPARASITES DE POISSONS

(30) Priority: 30.06.2014 US 201462018685 P
(43) Date of publication of application: 06.01.2016
(73) Proprietor: Ardeo Technology AS, 5229 Kalandseidet (NO)
(72) Inventor: Wheatley, Samuel, Eric, 5229 Kalandseidet (NO)
(74) Representative: Onsagers AS

(56) References cited:
- EP-A1- 2 559 336
- GB-A- 2 309 621
- US-A1- 2006 036 196
- US-A1- 2013 050 465

## Description

### Field of the invention

The present invention relates to sea lice, more particularly to an apparatus and method for the localization and removal of sea lice from fish.

### Background

Aquaculture of fish is an increasingly important source of food for the world. Global production of farmed fish was 60 million tons in 2010 and provided 47% of all fish for human consumption. Of this total, 6 percent were diadromous fish (mainly Atlantic salmon) and 3 percent were marine fish. (ref: The State of World Fisheries and Aquaculture, UN FAO 2012). Aquaculture operations are vulnerable to natural disasters, predators, water pollution, various diseases and infestations of parasites. It is necessary in practice and, in many countries, also required by law to regularly monitor the health status of the fish in an aquaculture facility for evidence of disease or parasites. Some of the most important fresh water fish in commercial aquaculture are the various carps (family Cyprinidae), various tilapia (family Cichlidae) and the various catfish (family Ictaluridae and family Pangasiidae). Some of the most important marine fish in commercial aquaculture are the various salmons (family Salmonidae), various cods and pollocks (family Gadidae), various turbots and brills (family Scophthalmidae), and the various halibuts and flounders (family Pleuronectidae).

Fish raised in the high population density conditions typical of aquaculture are subject to various diseases and parasite infestations. In particular, various external parasites (or ectoparasites) are a significant problem for commercially important fish such as salmonids. These parasites are a problem because they can reduce the size of adult fish, kill younger fish, transmit disease and affect the viability of wild population (Culture of Cold Water Marine Fish, edited by E. Moksness, E. Kjørsvik and Y. Olsen, Blackwell Publishing Ltd, 2004). Ectoparasites exist in all salinity levels from fresh water to sea water and affect many different fish species.

Control of fish parasites in aquaculture is desirable economically, environmentally and legally. Some existing strategies to control parasites, such as externally applied medications, are dangerous to handle, can adversely affect the surrounding environment and can affect the marketability of the fish. In addition, some parasites have developed resistance to traditional pharmaceutical treatments. This has stimulated research into new medications, vaccines, genetically engineered fish, and food additives which may be effective against parasites. Alternative approaches to parasite control focus on environmentally friendly methods which do not rely on pharmaceutical materials, do not contaminate the fish or the surrounding environment and are potentially more cost effective. None of these alternative methods is entirely satisfactory. There remains a need for an effective, low-cost and environmentally friendly method to control ectoparasites of fish in commercial aquaculture.

In addition to controlling parasites, it is also useful to obtain information on a) the extent of the parasite infestation (for example, average number of parasites per fish), b) the types of parasites (where several species may coexist), c) the age or life phase of the parasite, d) the sex distribution of the parasites, and e) where possible, other variables that affect the viability of parasites (for example, body temperature) in an aquaculture installation. This statistical information provides an indication of the health of the fish and the entire facility. Unexpected changes in infestation extent can signal a problem that needs attention from the operator of the facility. Therefore, it is desirable that a parasite control system should provide such statistical information continuously during its operation.

In addition to being effective and environmentally friendly, a good parasite control strategy must also be cost-effective. It is known that parasite infestations can be avoided entirely by use of closed production facilities and careful control of incoming water, food and fish stocks. While this option is currently under active investigation for certain marine fishes (including various Salmonidae and Gadidae species), the majority of facilities are still open production facilities. Open facilities are used because closed facilities incur additional costs for, for example, pumping, removal of biological waste material, oxygenation, etc. In an open facility surrounding water flows through the facility without limitation which exposes fish continuously to the external environment including new parasites. However, parasite control in open production facilities also incurs costs. For example, current parasite control costs for the aquaculture of Salmonidae species in Europe (Norway, Ireland, Scotland) in open facilities are on the order of 3-5% of overall production costs.

This disclosure concerns an environmentally friendly system and a method for the detection and removal of external parasites of fish, particularly salmon. It is intended for use primarily in open aquaculture production facilities and is expected to be cost-competitive with existing approaches.

### Prior Art

There are several known parasite control methods and devices in aquaculture that are considered to be environmentally friendly. Here, the term "environmentally friendly" means any parasite control method which is not based on the use of pharmaceutical or biologically active chemical materials.
1. Biological approaches: Cleaner fish can be added to the cage that, in the right conditions, will eat the parasites directly from the farmed fish. For example, various species of wrasse (Labridae) such as the Ballan wrasse will remove the sea lice that affect Atlantic salmon by eating them. This method is well-known and is effective. The negative features of this approach are a) there are additional costs for the production and feeding of the cleaner fish, b) the cleaner fish can be overly aggressive and damage to the fish to be cleaned, c) the cleaner fish may not tolerate the same environment as the production fish (for example, the same temperature range) and d) the cleaner fish must be moved regularly with associated logistics costs and possibility for the transfer of other diseases after they have temporarily cleaned all the fish in one production cage.
   Traps based on optical signals have been proposed to deceive salmon lice to enter the trap instead of locating their intended host. This potentially reduces the number of salmon lice available to infest the fish. This method does not work well in practice.
   It has been observed that mussels will consume sea lice larvae. By placing mussel cultivation close to an aquaculture installation, the mussels will filter the water and potentially reduce the quantity of sea lice available to infest the fish.
2. Mechanical approaches: High pressure water jets may be used to remove parasites from salmon as described in Norwegian patent NO 304171 B1. This method is stressful for the fish and requires a large and expensive fish pumping and treatment apparatus. This apparatus is typically moved from one installation to the next such that parasite removal is not continuous. Another mechanical method is the provision of a coarse, passive structure in the tank which fish can use to clean themselves as described in patent WO2011 099865 (2011). It is not known whether fish will make use of this device or not in practice.
3. Thermal approaches: The fish may be placed temporarily in an unusually warm water environment such that the parasites will detach from the fish as described in Japanese patent JP2008011764A (2008). This method is considered stressful to the fish.
   Norwegian patent NO 331345 2010 describes a method for automatically recognizing parasites with a machine vision system and then damaging the parasites with a laser. The specific damage mechanism is not further identified but is likely due to hyperthermia. This method suffers from false detections of parasites and subsequent injury to the host fish by the laser.
4. Inorganic chemical approaches: Patent WO 2013001317A2 (2011) discusses the use of an inert inorganic substance, namely particulate calcium oxide or calcium hydrate, which is reported to kill salmon lice in sufficient concentration.
6. Closed production facilities: It is possible to prevent parasite infestation by the simple strategy of using a closed tank, insuring that juvenile fish are free of parasites and then filtering the incoming water. Such closed systems are under active investigation at this time. They may be placed in the sea or on land. This approach has been considered too expensive for marine fish. However, the costs for parasite control in open production facilities must be compared with the costs for establishing and operating a closed production facility.

It is preferable for cost reasons to have a parasite control method which is consistent with the prevalent open cage production of marine fish. In an open cage, new parasites may enter and leave the tank with the flow of water. Since new parasites may enter, a viable solution must operate either continuously or periodically to remove the new parasites and thus maintain a sufficiently low number of parasites.

Prior art regarding optical detection methods for ectoparasites on fish has been disclosed concerning detection of at least one commercially important parasite (L.salmonis):
1. An academic paper (R.D. Tillett, C.R. Bull, and J.A. Lines, An optical method for the detection of sea lice, Lepeophtheirus salmonis, Aquacultural Engineering, 21, (1999) 33-48) describes video imaging of parasites through bandpass filters centered at either 700nm or 800nm. The authors conclude that the salmon lice L. salmonis can be detected by video imaging in properly selected wavelength bands especially against the lighter colored portions of the salmon's skin. This paper does not disclose the use of fluorescence for detection of ectoparasites.
2. The commercial company Vaki Aquaculture Systems Ltd of Iceland describes a project called VisuaLice on their webpage http://www.vaki.is/News/FishFarming/More/visualiceproiect. The project concerns a "A passive, automated counting system ..." for salmon lice. The intent of the work appears to be automatic counting of lice on salmon based on image analysis. However, no other technical information is disclosed. This webpage does not disclose the use of fluorescence for detection of ectoparasites.
3. The Norwegian patent NO20100190 (A) ("Method and Device for Destroying Parasites on Fish", also published as WO2011115496 (A1), US2013050465 (A1) etc.) discusses the use of machine vision and "optical recognition" of contrast differences in pictures from a camera to detect and localize parasites on fish. This patent does not disclose the use of fluorescence for detection and localization of ectoparasites.
4. Røsvik (patent WO2013053597 A1, Method and System for Detecting a louse on a Fish, 2011.10.12) discusses detection of lice on salmon by subtracting the background and subtracting the fish's skin from an image and then searching for louse-shaped objects in the remaining part of the picture. This method is said to locate lice on a fish in an image This patent does not disclose the use of fluorescence for detection and localization of ectoparasites.
5. EP 2559336 discloses the detection of anomalies in fish alevins using optical machine vision and algorithms, said fish alevins being deposited on an observation plate for analysis.

To our knowledge, there are no publications or patents that mention use of the fluorescence properties of any fish parasite in connection with identification or localization of parasites. Neither, are there, to our knowledge, any publications or patents that mention the removal of parasites by any method using localization based on fluorescence.

The prior art for optical detection of ectoparasites is inadequate in practice because the false detection rate is too high which can lead to inaccurate counting of ectoparasites or injury to a host fish by a removal method attempting to remove an ectoparasite which does not exist. There is a need for a more reliable optical detection method.

Relevant prior art regarding inhibiting attachment of or removal of ectoparasites from fish using acoustic or optical methods has been disclosed:
1. Skogseth (patent WO2013095153 (A1), System and Method for Inhibiting Parasites to Infest and Attach to Aquatic Animals) discusses the use of low frequency (<100Hz) acoustic waves which are claimed to inhibit attachment of parasites to fish. It is not known if this method is effective. This is unrelated to the use of acoustic methods for ectoparasite removal in the present disclosure.
2. Iwamoto et al in Japan (patent WO2013051725 (A1) Sanitation Management Method of Farmed Fish and Device Thereof) discuss the use of ultrasonic generators in a fish tank and say that the presence of such ultrasonic waves causes parasites to be removed from the fish.
3. Norwegian patent NO20100190 (A) ("Method and Device for Destroying Parasites on Fish", also published as WO2011115496 (A1), US2013050465 (A1) etc.) discusses the use of focused light harmful to the parasite such as, for example, lasers to remove salmon parasites from fish. This technology has been commercialized but has a high false detection rate resulting in injury to the host fish.
4. Jackman (patent WO9417657 (A1), Removal of Parasites from Fish, 1993) discusses an acoustic method for parasite removal. It states that "The characteristics of the emitted sound waves are chosen such that they stun or kill the parasites, preferably by causing them to resonate or otherwise cause them to be dislodged from the host fish, without causing harm or any permanent damage to the fish themselves". The means by which this is accomplished is not explained in detail. This patent does not seem to concern acoustic energy directed at the parasite directly.

Prior art for prevention of attachment or removal of ectoparasites from fish by acoustic or optical means are generally not described in sufficient detail to permit analysis of the approach. The Norwegian patent NO20100190 (A) is combines "machine vision" with a laser for ectoparasite removal. This approach is inadequate because the machine vision component gives false positive detections of ectoparasites. The laser is then directed to a position on the fish which does not in fact have a parasite resulting in undesirable injury to the host fish.

### Brief summary of the invention

The problem to be addressed by this invention is that fish in open aquaculture installations are commonly infested by external parasites. The control of these parasites is an important aspect of fish health and is mandated by law in some jurisdictions. Parasites can also have a direct negative effect on other fish outside the installation. Some of the pharmaceutical control strategies can reduce the growth profile of the fish and damage the environment outside of the installation.

A parasite control method is required which a) is cost effective, b) is environmentally friendly, c) is generally applicable to all temperature and salinity conditions in which fish are raised, d) is generally applicable to all external parasites, e) operates continuously or periodically to maintain a sufficiently low number of parasites and f) does not stress the fish. The system and method disclosed here meets all of these criteria. As mentioned above, cleaner fish (for example wrasse) are an effective biological method for parasite control in aquaculture albeit with some negative aspects. Cleaner fish perform three essential functions in relation to fish parasites: a) sequential inspection of fish, b) identification and localization of parasites and c) removal and destruction of the parasite. The same functions may be accomplished in a man-made system.

This disclosure is concerned with a system and method to accomplish the same three essential functions but without the negative aspects of using cleaner fish. The present invention improves on the prior art by providing for reliable detection of ectoparasites on fish based on optical fluorescence combined with safe removal of ectoparasites by use of directed acoustic or optical radiation.

A system and method is disclosed in which external parasites (ectoparasites) of fish, particularly crustaceans of the class Maxillopoda, can be identified, localized and removed from fish using high intensity optical or acoustic irradiation. The system inspects and, if necessary, treats one fish at a time. The system may be operated in such a way that fish enter the system voluntarily at random intervals. Alternatively, the system may be operated in such a way that fish are directed into the system systematically. Once a fish enters the system, parasites are located using the fluorescence they emit in response to suitable illumination. Information about the parasites may be obtained from the characteristics of the fluorescence signal. The number of parasites detected by the system is a useful measure of the overall health of an aquaculture installation and allows the operator to avoid manual counting of parasites. When parasites are detected, they are removed by application of high intensity acoustic or optical radiation. The system and method are useful in any context where fish have external parasites that fluoresce, but most particularly in the context of the aquaculture of salmon and the ectoparasites particular to salmonids.

The disclosure is intended for application in aquaculture of fish where the fish are subject to infestation by external parasites. Some of the relevant external parasites include but are not limited to copepods (from the class Maxillopoda, subclass Copepoda):
a) one or more of at least 148 species of the family Caligidae, genus Lepeophtheirus,
b) one or more of at least 300 species of the family Caligidae, genus Caligus,
c) one or more of at least 107 species of the family Lernaeidae, genus Lernaea,
d) one or more of at least 177 species of the family Ergasilidae, genus Ergasilus,
e) one or more of at least 142 species of the family Argulidae, genus Argulus, etc
(see Appeltans W, Bouchet P, Boxshall GA, Fauchald K, Gordon DP, Hoeksema BW, Poore GCB, van Soest RWM, Stöhr S, Walter TC, Costello MJ (eds), The World Register of Marine Species, 2009, available online at http://www.marinespecies.org) The disclosure is relevant to fish that live in one or more of freshwater, brackish water or salt water. Some parasites are specific to only one species of fish while others can live on several species.

A purpose of the disclosure is to identify, locate and remove external parasites on affected fish in an aquaculture facility. This is done by regularly inspecting fish in the aquaculture installation, locating any parasites as described below and removing any parasites by one of the methods described below. The average number of ectoparasites on fish is thus reduced resulting in a healthier environment in the aquaculture facility.

A second purpose of the disclosure is to count the number and type of parasites found on the fish in a facility and thus estimate the total number of parasites (or equivalently, average number of parasites per fish) in an installation. It is expected to provide a more statistically reliable estimate of the number of parasites than current practice based on costly manual counting of a small sample. Current practice is also stressful for the fish. This statistical information is required by law in some jurisdictions.

A third purpose of the disclosure is to inspect, count and remove parasites without stress for the fish. The inspection and removal of parasites as disclosed here does not require physical contact with the fish. Further, the method does not require that the fish be removed from the water or be forcibly moved in any way such as by pumping. Fish will be unaware of the inspection and parasite removal process.

### Brief Description of the drawings

| | |
|---|---|
| 1 | Tunnel |
| 2 | Fluorescence detection schematic |
| 3 | Damage mechanisms schematic |
| 4 | Fluorescence measurement setup |
| | Setup used to measure the spectrum and spatial distribution of the fluorescence from the parasite L. salmonis. |
| 5 | Fluorescence spectrum |
| 6A | Focal geometry with 5x magnification |
| 6B | Focal geometry with 25x magnification |
| 7 | Electrical setup schematic |
| | Electrical setup to drive the acoustic transducer used to destroy parasites |
| 8 | Fish in tunnel - acoustic removal |
| 9 | Fish in tunnel - laser removal |
| 10 | Salmon lice with acoustic damage |
| | Acoustic damage to a parasite (L. salmonis) showing lateral extent of destruction |
| 11 | Autofocusing accuracy |

### Detailed description of the Invention

The invention is directed to a method for monitoring and control of ectoparasites on fish in an aquaculture facility according to claim 1, and a system for monitoring and control of ectoparasites on fish in an aquaculture facility according to claim 12. Preferred embodiments of the invention are set out in the dependent claims. The present disclosure is related to a **system** consisting of two main components; a) a means for manual or, preferably, automated detection and localization of parasites on fish within an aquaculture facility by means of the fluorescence from the parasite and b) a means for removal of the parasites. These functions are done in a constrained volume which is only a few times larger than the volume of the fish itself.

The present disclosure is also related to a **method** for inspection, identification and localization of parasites based on detection and analysis of the optical fluorescence signal from the various parasites with suitable excitation illumination. The method for use of the disclosure comprises these sequential steps:
1. One fish enters the system either randomly or, preferably, systematically. The active area of the system is typically an enclosed area which preferably excludes most external light. The volume of the active area is typically sufficient for one fish at a time. A mechanism may be used to control ingress or egress from the active area during operation.
2. The fish, or a portion of the fish, is illuminated by an optical radiation source with a spectrum selected to effectively excite one or, possibly, several fluorescent structures in the ectoparasite of interest. The illumination may be continuous or modulated (for example, periodically pulsed) to aid detection of the fluorescence signal.
3. The fish is inspected for a fluorescence signal indicating the presence of an ectoparasite. Detection of a fluorescent signal is typically accomplished by imaging the fish with a 2D detector but the fish may also be scanned with a line (1D) detector. Optical filters are used to selectively detect the fluorescent signal. Coherent detection methods may be used if the excitation source is modulated. The spectrum of the fluorescent signal may be analyzed to improve detection reliability. The spatial distribution of the fluorescent signal may be measured to improve detection reliability. The fish may be inspected from several directions simultaneously or sequentially in order to fully inspect the entire surface of the fish.
4. If a parasite is not detected, the fish leaves or is released from the system, no further action is taken and the system prepared for the next fish. A database entry is made for that fish.
5. If a parasite is detected, additional action occurs. The precise 3D location of the parasite is determined with respect to the measuring apparatus or with respect to the fish. Localization will compensate for residual motion of the fish by tracking the fluorescent signal in real time for the time necessary for removal. The parasite will be removed from the fish by means of either optical or acoustical radiation. The fish is released from the measurement system and the system prepared for the next fish. A database entry is made for that fish documenting the parasite detected and, optionally, its removal.

Further details of the invention follow with reference to the figures.

### Constrained volume

The active volume of the system is a physically delimited volume characterized by a length, a width and a height large enough to contain one fish. The dimensions of the volume may be any convenient value but are preferably twice the maximum dimensions of a typical fish in the facility along all three primary axes. Many aquaculture facilities will contain fish with a similar size in which case a single active volume size is preferred. In situations where the size distribution of the fish varies by more than a factor of two along any axis, it is preferable to use several systems, each with an active volume scaled by a factor of two and to segregate fish so that they enter the appropriately sized system.

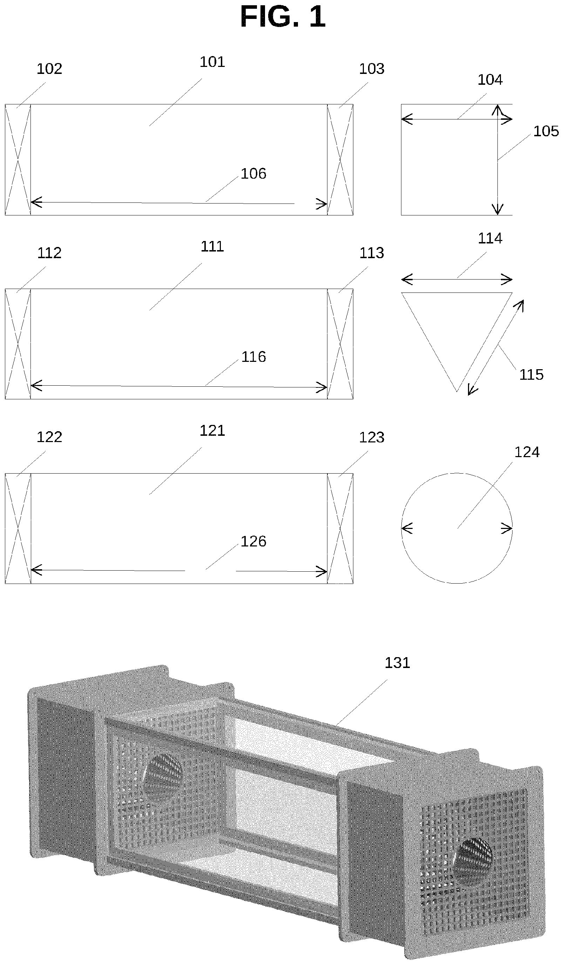

The active volume is predominantly a hollow cylinder characterized by a cross-section shape and a length with some means of entrance and exit control (i.e. a "door") at each end as shown schematically in Fig. 1. The figure shows, without limitation, several possible cross-sectional shapes.

Volume **101** is a rectangular tube with width **104** along the x-axis, height **105** along the y-axis and length **106** along the z-axis. The "doors" at each end are denoted by **102** and **103.** Volume **111** is a triangular tube with width **114** along the x-axis, height **115** along the other two sides and length **116** along the z-axis. The "doors" at each end are denoted by **112** and **113.** Volume **121** is a circular tube with diameter **124** and length **126** along the z-axis. The "doors" at each end are denoted by **122** and **123.**

The dimensions of the active volume are chosen so that one fish will fit comfortably in the volume without stressing the fish. If the dimensions of the tunnel are approximately 2 times larger than the dimensions of the fish, then the active volume will be approximately eight times larger than the volume of the fish. It is preferable that the ratio of the active volume to the volume of one fish is between 2 and 20 and most preferable that this ratio is between 6 and 10. In practical aquaculture installations, all fish in one facility usually have similar size. It is preferable that the treatment volume is appropriate to the population of fish to be examined and treated and is increased as the fish grow.

In Fig. 1, volume **131** is a specific example of a treatment volume with rectangular cross-section and passive, funnel-shaped entrance and exit doors. When properly sized relative to the size of the fish, this causes the fish to swim in one direction but not the other. The treatment volume itself has sidewalls that are optically transparent for the fluorescence to be detected. It is preferable that there is sufficient flow of water through the tunnel so that fish are comfortable passing through. This may be accomplished by active pumping of water through the tunnel through the many perforations in the ends.

It is important to emphasize that the current invention accomplishes parasite detection, localization and, optionally, parasite removal in an active volume preferably only a few times larger than the volume of the fish itself. This preferred volume is very small compared to the entire volume of a typical commercial aquaculture facility. In addition, fish are treated sequentially and individually. These features distinguish this invention from parasite control schemes that a) treat large volumes at once potentially containing many fish, b) treat the entire fish rather than only the location where a parasite is located, c) locate parasites by some means other than fluorescence detection.

### Detection of parasites

The invention is based on locating parasites by means of fluorescence they emit when illuminated by a suitable illumination source, also known as an excitation source. The volume of water illuminated by the excitation source is referred to herein as the "active volume". The portion of the surface of a fish which is illuminated at a given time is referred to herein as the "active area".

The fluorescence of biological molecules and structures in general is well known and described in many textbooks (for example, J R Lakowicz, Principles of Fluorescence Spectroscopy 3d Ed., Springer 2006). However, the fluorescent properties of ectoparasites have not been previously reported or applied to the problem of detecting and localizing ectoparasites.

The active volume must contain a means of illuminating the fish with a suitable spectrum and sufficient intensity. The active volume must also allow detection of the emitted fluorescence by a suitable detector which can locate the source of the fluorescence.

The disclosure is generally applicable to any parasite that exhibits fluorescence. To apply the disclosure to a particular parasite requires prior knowledge of the excitation and fluorescence spectra for the parasite of interest. Fluorescent materials have a characteristic excitation spectrum and there is generally a specific excitation wavelength that provides the most efficient generation of fluorescence. It is most preferable to use a narrowband excitation source with a wavelength at or near this optimum wavelength. If no source is available at the desired optimum excitation wavelength, a nearby wavelength, as close as possible to the optimum wavelength, is preferable.

The inventor has observed that two commercially important parasites of salmon, Lepeophtheirus salmonis and Caligus elongatus, fluoresce when excited by optical radiation in the wavelength range of approximately 360 - 400nm (commonly known as near ultra-violet (NUV) or UVA radiation). The inventor has further observed that these parasites do not fluoresce uniformly but rather that certain anatomical structures fluoresce and others do not. In addition, various parts of the parasite can fluoresce with differing fluorescence spectra. These details of the emitted fluorescence may be used to a) detect the presence of a parasite and identify the type of parasite, b) reliably distinguish it from the host fish, and c) to localize it. It is important to note that the fluorescence comes from naturally occurring molecules in the parasite and is not the result of any artificially added fluorophore such as, for example, a stain. The properties of this fluorescence and its spatial distribution are characteristic of the particular parasite.

The disclosure also requires that the water has sufficient optical transmission of the excitation and fluorescence signals. It is well-known that clean ocean water has an optical absorption coefficient that is less than 0.002/cm between the wavelengths of 250nm and 600nm which corresponds to a loss of less than 1% over a 5cm pathlength. The optical absorption coefficient is less than 0.0004/cm between the wavelengths of 300nm and 560nm which corresponds to a loss of less than 1% over a 30cm pathlength. Path lengths from the excitation source to the surface of the fish are preferably in the range of 1cm to 50cm and most preferably in the range of 5cm to 10cm.

Once a fish enters the active volume, it is illuminated by an optical excitation source with a spectrum selected to efficiently excite the fluorescent structures in the parasite of interest. The illumination source is preferably included in the active volume of the system so that it is as close as possible to the fish to be examined. This minimizes losses in the intervening water and maximizes the incident intensity.

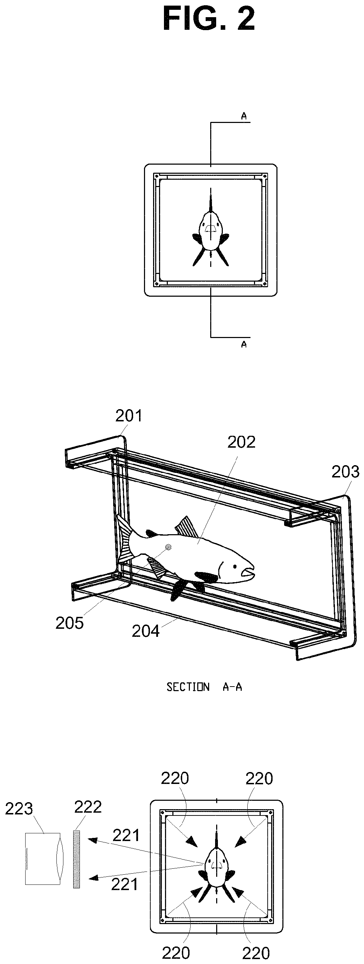

One possible embodiment of the invention is shown in Fig. 2. A fish **202** enters the active volume which is an enclosed pipe or tunnel with typically triangular, rectangular or cylindrical form comprising an entrance **201,** a treatment volume and an exit **203.** The system is preferably arranged such that the fish may only pass through the system in one direction and may be constrained to remain in the treatment volume for the duration of the inspection and treatment. The sidewalls of the active volume **204** are typically an optically transparent material that efficiently transmits the fluorescent signal. One or several ectoparasites **205** may or may not be present anywhere on the surface of the fish.

An excitation illumination controller controls the excitation illumination source **220** to illuminate the fish. Those familiar with optical technology will understand that a multiplicity of arrangements are possible to illuminate a fish. However, for efficient inspection of fish, that is, to detect and remove parasites as quickly as possible, it is preferable to illuminate substantially the entire fish at once and use several detectors or cameras to search for the fluorescence signal from the parasites. Systems involving scanning an illumination source over the fish are possible but will likely use more time and are thus less preferable. The excitation source may be immersed in the water inside the pipe or in a dry area outside the transparent sidewalls. The illumination spectrum is selected to efficiently stimulate the fluorescence signal from the parasite of interest. It is preferred that the illumination is constant or has a time variation which does not startle or stress the fish.

One or several optical detectors (for example, a camera **223** or a stereo vision system) are used to acquire images of the area occupied by the fish. The images are searched for the known fluorescent signal **221.** A low-noise optical detector is useful for fluorescence detection such as, for example, a cooled CCD array detector. A suitable optical filter **222** is used to improve detection of fluorescence.

The excitation illumination and the active volume are most preferably arranged such that the only illumination of the fish is from the illumination source and there is no external or "background" illumination. Further, it is preferable that the illumination source contains no energy above a certain wavelength which is below the wavelength of the fluorescence spectrum. This may be accomplished by, for example, filtering the output of the illumination source. Further, it is preferable that the detector **223** is filtered by an optical filter **222.** The filter is preferably chosen to reject or absorb all wavelengths emitted by the illumination source and to efficiently transmit substantially all of the wavelengths from the fluorescence. In this preferred arrangement, the detection sensitivity is limited by the dark response of the detector.

When the preferred arrangement cannot be realized in whole or in part, background illumination should first be reduced as much as possible. Fluorescence detection can be further improved by modulating the excitation and detecting the fluorescence signal coherently with respect to the excitation using, for example, a gated detector. When this approach is used, it is preferable that the modulation frequency is high enough so that the excitation will appear constant and thus not startle the fish. Coherent detection allows detection of relatively faint signals in the presence of a larger constant background signals such as daylight illumination or general artificial illumination at night.

In another detection strategy, the spatial distribution of the fluorescence is measured to further confirm the presence of a parasite. Once a parasite has been tentatively located, the system may 'zoom in' on the suspected parasite and note the spatial distribution of fluorescence among the various parts of the parasite. This spatial variation may be used to confirm that the signal originates in a parasite.

In another detection strategy, the spectral variation of the detected light s measured to further confirm that it originates from a parasite.

Evaluation and treatment of each fish requires some time. The system may be operated in a passive mode in which fish swim through the active volume spontaneously. However, for maximum efficiency as measured by the number of fish processed by the system per unit time, it is preferable to control the entrance, processing and exit times for each fish. This may be done by actively controlling the entrance, exit or both such that a fish may not leave until treatment is completed and a fish may not enter while another fish is being treated. Evaluation time and, optionally, treatment time can have any value but preferably less than 30 seconds per fish and most preferably less than 10 seconds per fish for commercial viability.

During the time necessary to decide if there is a parasite present on the fish or not (typically < 5 seconds), it is preferable to loosely constrain the fish in a limited volume of water with adequate water flow and oxygenation so that the fish is comfortable. If no parasite is found, the fish is simply released from the system. When a parasite is found, the fish will be constrained for an additional few seconds so that the parasite may be further analyzed and removed from the fish.

For each fish that enters the system, statistics are accumulated about the number of parasites on the fish and the details of that parasite. This information is useful to the operator of the installation and must be provided to aquaculture authorities in some locations. The use of this system eliminates the need for costly and labor-intensive manual counting and eliminates stress for the fish which are normally removed from the water to be inspected.

### Localization

When a parasite is detected, it is next located precisely relative to the host fish before it can be removed. To minimize stress on the fish, it is preferable that the fish is not physically constrained in a precise position relative to the parasite removal system although it may be constrained to a limited volume of water without physical contact with the fish. Therefore, some limited movement of the host fish must be anticipated.

A single array detector with associated processing capability can locate and track the fluorescence signal in the two axes parallel to the fish. To obtain the third dimension, that is, the distance to the parasite, one can use, for example, two cameras and standard stereo vision methods.

After a parasite is detected and just prior to removal, the fluorescence signal from the parasite is tracked in real time using analysis of the image of the fluorescence signal from a camera. Cameras useful for this application can generally provide images with a frame rate of at least 10 frames per second (fps). Final precision guidance for the removal is obtained from an optical sensor integrated with the laser or acoustic source used for removal of the parasite. In one possible implementation, an optical quadrant sensor is used to maintain transverse alignment with the parasite. Acoustic ranging is used to determine the precise distance to the parasite when acoustic removal is used.

In the preferred implementation, only one parasite will be removed from a fish in each transit through the system. If the fish has additional parasites, they may be removed on later transits.

### Parasite removal

Parasites are removed from the fish using either high intensity optical (laser) or high intensity acoustic radiation without physical contact with the fish. By removal, we mean that the parasite is either irritated by the radiation and removes itself from the fish or is fatally injured by the radiation, dies and falls off the fish.

There are various advantages and disadvantages to the use of high intensity acoustic and optical radiation for parasite removal.
a) Optical radiation may be collimated over longer distances and focused to a smaller diameter due to its relatively short wavelength than acoustic radiation. The wavelength of optical radiation is typically 0.5 micrometer while the wavelength of acoustical radiation is typically 200 to 600 micrometers. This feature of optical radiation is not an important advantage for this invention because the preferred working distance is less than 10cm.
b) Optical radiation will propagate well in clean water but is more susceptible to attenuation and scattering in unclean water than acoustic radiation. Acoustic radiation is less sensitive to contaminants in the water. The water must be clear in order to detect fluorescence so this factor is not a significant advantage for acoustic radiation.
c) High power optical radiation can cause blindness in fish if misdirected. High power acoustic radiation can cause physical damage to the fish if misdirected.
d) It is less costly to produce high power acoustic radiation than a similar power level of optical radiation.
e) Optical radiation is more easily directed to the target by, for example, a steering mirror whereas an acoustic transducer must be moved to the desired location.
f) Acoustic radiation has the possibility to propagate through the parasite and continue into the host fish unless the focal region is properly designed and the radiation is properly focused. This invention uses a properly designed focal region and proper focusing to avoid this potential problem. Optical radiation will not propagate as well through parasites.

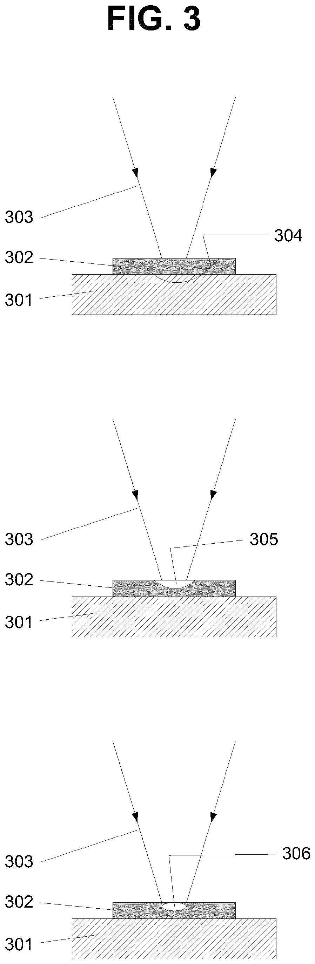

When sufficiently high power radiation is directed at and absorbed by parasites, they are fatally injured by one or several possible mechanisms including a) hyperthermia and consequent denaturing of tissue or b) direct physical damage from tissue vaporization and ablation or c) direct physical damage from a local shock wave induced in the parasite. Fig 3 shows a schematic representation of the various mechanisms by which parasites can be fatally damaged. The upper figure depicts thermal destruction by incoming optical or acoustic radiation **303** which is absorbed by parasite **302** on the surface of a fish **301.** The pulse is long enough that heat has time to diffuse through the parasite and slightly into the fish as indicated by thermal contour **304.** Tissue is heated sufficiently to denature the biological material but is not vaporized. The middle figure depicts destruction by confined boiling and resulting tissue ejection. Here, the incoming high power pulse of optical or acoustic radiation **303** has sufficient energy in a sufficiently short pulse to vaporize a portion **305** of the parasite which in turn is a fatal to the parasite. The lower figure depicts destruction by means of either a laser induced non-thermal breakdown or acoustic cavitation **306** just inside the parasite. The first two mechanisms are of most practical importance for the invention. The very high intensities required for the third mechanism are less practical because there is more risk of injury to the fish.

For both optical and acoustic radiation, the effective focal volume is that volume which is delimited by the 50% power contour relative to the peak intensity in the focal volume. For purposes of discussion, consider the propagation direction to be the positive z-axis where the origin is located at the position of peak intensity in the focal volume which is called the "focal point". The x- and y-axes are chosen to form a convenient rectangular coordinate system in the focal plane z=0. The half-power contour in the focal plane has a characteristic extent from the origin which we refer to as a diameter or radius even though the contour may not have precise circular symmetry. The distance along the z-axis between the half-power points is the length of the focal volume.

An ectoparasite lives on the surface of a fish. The parasite has a certain thickness and the fish also has an external portion of the integument or skin consisting of scales and mucus. Without reference to a specific parasite or fish, the thickness of a parasite may be taken as typically 0.5mm and the thickness of the epidermis is typically about 1mm. An essential aspect of the disclosure is that the radiation intensity must be high enough to be fatal at the outermost surface of the parasite but low enough below the epidermis such that it is not dangerous or sensible to the fish. The design of the focal volume to accomplish this is described below.

As mentioned earlier, parasites may be destroyed by hyperthermia. We use the heat capacity of water which is 4.2 J/g/K as an estimate for the unknown heat capacity of the internal tissue of the parasite. We further estimate that the parasite is permanently injured when the temperature rise in the internal tissue is 100C leading to an estimate of the required energy deposition as 402 J/g or equivalently 402 J/cm³. Again, this is only an estimate because the internal structure of a parasite is not homogeneous and, in addition, the heat capacity of these individual structures is not known.

### Damage by acoustic radiation

The sequence of processes leading to energy deposition in a parasite by acoustic radiation is a) electrical energy is applied to an acoustic transducer, some energy is reflected due to impedance mismatch, some is dissipated as losses and some performs useful work on the water, b) the transducer creates a converging acoustic wave in the water where the focal point is at the outer surface of the parasite, little energy is lost in transmission from the transducer to the parasite, c) the acoustic wave in the water meets the parasite, some energy is reflected due to impedance mismatch, some energy is absorbed in the tissue of the parasite causing damage and some energy propagates through the parasite and into the epidermis of the fish.

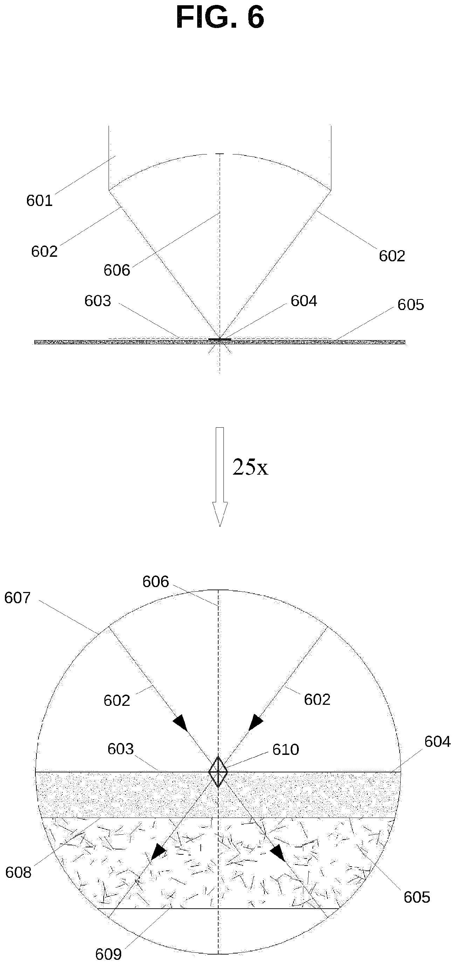

Fig. 6 depicts one possible type of acoustic transducer capable of producing high intensity acoustic radiation. In this case, a single element transducer **601** is shown with a curvature such that the f-number (the ratio of the focal length through axis **606** to the diameter) is preferably less than 1. The radiation field produced by such transducers is sometimes referred to as "high intensity focused ultrasound" or HIFU. Such a transducer produces a converging wave **602** which reaches a minimum diameter in the focal plane **603.** The lower part of the figure 6 shows a 25x expanded view of the focal region **607.** The converging acoustic field **602** produces a focal spot on the upper surface of a parasite **604** which in turn is located on the skin of a fish **605.** At this level of magnification, the focal volume **610** for acoustic energy is visible. The diverging acoustic field has a much larger area and correspondingly lower intensity at the lower surface **608** of the parasite and still lower intensity at the lower surface **609** of the epidermis of the fish.

The focal volume may be adjusted for the particular parasite of interest. The most important design goal is that the acoustic intensity at the lower surface of the parasite should be less than 10% of the intensity at the upper surface of the parasite. This goal allows destruction of the parasite without injuring the fish. The geometry of the focal volume is determined primarily by a) the f-number of the transducer and b) the operating frequency. Lower f-number and higher operating frequency lead to a smaller focal diameter and half-length of the focal volume (i.e. distance along the z-axis from the peak intensity point to the half-power point).

The preferred operating frequency that provides a suitable half-length of the focal volume is in the range of 1MHz to 20MHz, more preferably in the range 2MHz to 16MHz and most preferably in the range of 4MHz to 12MHz. The operating frequency may be the fundamental frequency of the transducer or a higher harmonic frequency. The preferred transducer f-number is in the range 0.6 to 1.1 and most preferably in the range 0.7 to 0.9. The preferred transducer diameter is in the range 20mm to 80mm and most preferably in the range 40mm to 80mm. The most preferred ranges for transducer parameters lead to a value for the half-length of the focal volume in the range 0.15mm to 0.3mm which is suitable for parasite removal.

After the f-number, diameter and operating frequency of the transducer are selected, the radius of the focal volume is also determined. The most preferred ranges for transducer parameters lead to a value for the radius of the focal volume in the range 0.08mm to 0.19mm which is suitable for parasite removal.

These most preferred parameter values also imply that the focal volume is in the range 0.003mm³ to 0.034mm³ and nominally 0.008mm³.

An acoustic transducer delivers a specified power into the water in a specified pulse-duration. The product of the power and the pulse duration is the energy per pulse. Propagation losses in the water between the transducer and target are negligible. When the acoustic energy is focused into a small area, one can estimate the intensity in the focal plane. The attenuation in the parasite is not known in general but a typical value for the attenuation coefficient of soft tissue is 0.54dB/cm/MHz. Loss increases linearly with frequency. For the most preferred frequency range of 8MHz to 12MHz, this value leads to an attenuation of 4.3dB/cm to 6.5dB/cm. With this attenuation value and the dimensions of the focal volume, one can then estimate the energy deposited in the parasite.

Recalling that the minimum deposited energy density is estimated to be 402 J/cm³ (Joules per cubic centimeter) or 402 mJ/ mm³ (millijoules per cubic millimeter) then, for the nominal focal volume, the required energy deposition is 3.2 mJ. This is an ideal lower bound on the required energy deposition in the parasite for physical damage. This simple estimate is correct if the energy is deposited rapidly enough that one may ignore heat loss to the surrounding water and other tissue. It also ignores any energy required for a phase change. In addition, some time is required to denature tissue. A practical minimum value for energy deposition in the parasite sufficient to cause physical damage should be significantly higher. A practical minimum value for energy deposition in the parasite that causes discomfort and thus may induce the parasite to remove itself from the fish is significantly less. Specifically:
a) For the most preferred acoustic focal volume, the preferred energy deposition for causing discomfort to the parasite is in the range 1mJ to 100mJ, more preferably in the range 1mJ to 30mJ and most preferably in the range 1mJ to 10mJ.
b) For the most preferred acoustic focal volume, the preferred energy deposition for causing destruction of the parasite is in the range 10mJ to 1000mJ, more preferably in the range 10mJ to 300mJ and most preferably in the range 30mJ to 100mJ

When sufficient energy is deposited in the parasite to heat the tissue above the boiling temperature, gas bubbles are created in the parasite causing severe and fatal physical damage in addition to any damage caused by heating. If the safety of the fish can be assured with this higher level of input, it is preferred over hyperthermia as a more certain means of destroying the parasite. This process of heating tissue above the boiling temperature over a time period of many acoustic cycles is distinct from cavitation which can occur with only a few acoustic cycles and at higher intensity. Parasites may also be destroyed by cavitation processes, but the required greater intensity level has a greater risk of injuring the fish at the same time.

The required energy may be deposited with high power and short pulse duration or lower power and longer pulse duration. The choice is dependent on the preferred mechanism of parasite removal. The duration of the acoustic pulse is preferably in the range of 100 nanoseconds (corresponding to two acoustic cycles at the maximum preferred operating frequency of 20MHz) to one second, more preferably in the range 3 millisecond to 300 milliseconds and most preferably in the range of 10 milliseconds to 100 milliseconds. An acoustic pulse with 10W for 100ms will deposit about 24mJ into a parasite which is fatal.

As mentioned, accurate focusing of the acoustic energy is critical for safe removal of parasites. It is desirable that the fish is not physically restrained so that there may be some movement of the fish's body. For submillimeter focusing accuracy, it is necessary to actively control the distance from the transducer to the fish. This may be referred to as "auto focusing". The focal length of the transducer is known and needs to be compared with the actual distance to the fish to generate an error signal which may then be minimized. There are many available methods to measure distance.

One particularly simple and low-cost method is to use the same transducer that is used to destroy parasites to also accomplish the auto-focusing function. For auto-focusing, the transducer is driven with short pulses, preferably in the range of 100 nanoseconds to 10 microseconds duration, more preferably in the range of 500 nanoseconds to 5 microseconds duration, most preferably in the range of 1 to 2 microseconds duration and nominally 1 microsecond duration. The round trip transit time for these pulses to reflect from the fish or parasite surface is dependent on the speed of sound in the water and the focal length of the transducer. For the nominal transducer focal length of 50mm, the round trip transit time is about 67 microseconds. The short pulses can be repeated with any interval greater than about 70 microseconds allowing a pulse repetition rate of about 10 kHz. As shown in the examples below, there is maximum reflection from the fish surface when the system is focused. One then needs only to maximize the reflection from the fish or parasite surface to achieve the correct focus. In the example, it is shown that it is possible to achieve a focusing tolerance of typically +/- 150 micrometers with this method. Standard signal processing methods such as gated integrators can be used to acquire the reflection signal with low noise. When one is ready to destroy a parasite, one switches the driving signal to the transducer to a longer pulse with the necessary higher power.

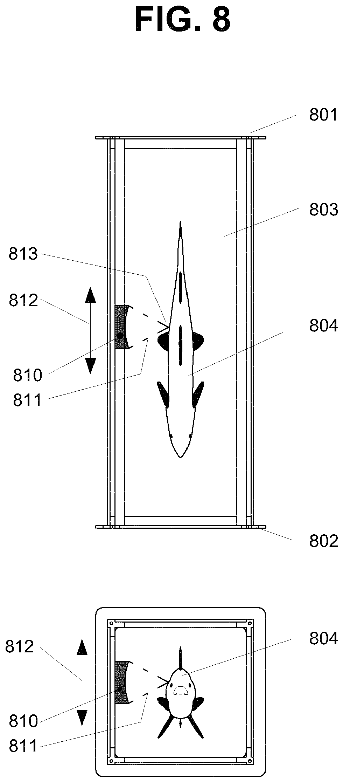

One implementation of the invention with acoustic removal is shown in Fig. 8. A fish **804** enters the system through the entrance **801** and is temporarily constrained from leaving through the exit **802.** The system contains water **803** with sufficient flow and oxygenation that the fish is comfortable. A low f-number acoustic source **810** is placed in the water such that it can move along 3 axes **812;** horizontally, vertically and axially as directed by the parasite location system. If a parasite is detected and localized, a pulse of acoustic radiation **811** causes sufficient discomfort to the parasite that it removes itself or causes fatal damage to the parasite **813.** The fish is then allowed to exit the system.

Since the parasites will be removed in a limited volume of water, it is practical to collect parasites when they either fall off due to fatal injury or remove themselves due to discomfort. In either case, they do not re-enter the main area of the aquaculture facility again.

### Damage by optical radiation

The basic goal of using optical radiation to remove parasites is the same as with acoustic radiation, namely to deposit sufficient energy into the parasite to injure or kill it without injury to the fish.

The optical focal volume has a different shape than the acoustic focal volume. The optical radiation is preferably produced by a laser with a well-defined single transverse mode. The beam radius at the laser output is typically 0.3mm to 0.5mm. However, this value is not important as it can be manipulated with standard Gaussian beam transformations to produce the desired beam radius at the parasite surface. The preferred beam radius at the parasite surface is in the range 0.1mm to 1mm and the most preferred beam radius is in the range 0.2mm to 0.6mm with a nominal value of 0.4mm.

The wavelength of the optical radiation is not critical and a wide range of values are possible as long as the water is transparent at that wavelength. This leads to a preferred wavelength range from 250nm to 800nm, more preferred range from 350nm to 700nm, most preferred range from 500nm to 600nm and nominal value of 532nm.

The most preferred values for wavelength and focal volume radius imply that the Rayleigh range for the optical radiation is much larger than the preferred distance from the optical source to the parasite. The Rayleigh range is also much larger than the thickness of a typical parasite so that the optical radiation may be considered as collimated at the parasite.

Parasites are heterogeneous structures with different properties in different areas. The optical absorption properties of these structures are unknown. However, they are not transparent so all radiation is absorbed or scattered in the tissue of the parasite. We estimate that absorption occurs in a range of depth from 0.1mm to 0.5mm.

Using most preferred parameter values, one obtains an estimate for the optical energy that must be deposited in the parasite to cause discomfort or fatal injury. The parasite is estimated to experience discomfort when the deposited energy is in the range 2.6mJ to 107mJ. The parasite is expected to be destroyed when the deposited energy is in the range 26mJ to 1079mJ. These energies are larger than those for acoustic radiation because the optical focal volume is larger than the acoustic focal volume.

The preferred pulse length for the optical radiation is in the range 100ms to 2000ms, more preferably in the range 200ms to 1000ms, most preferably in the range 300ms to 700ms and nominally 500ms. The pulse length is chosen to be in this range in order to keep the required laser power as low as possible for cost reasons. These values imply that the required laser power to destroy parasites is in the range 88mW to 1.6W for pulses with the most preferred durations. Higher power lasers can also be used with correspondingly shorter pulse lengths.

If the optical radiation has a wavelength in the same range as that of the fluorescence used to localize the parasite, the fluorescence detector should be protected from the high intensity used to remove the parasite. It is preferred to use a wavelength for parasite removal that is outside the fluorescence detection range.

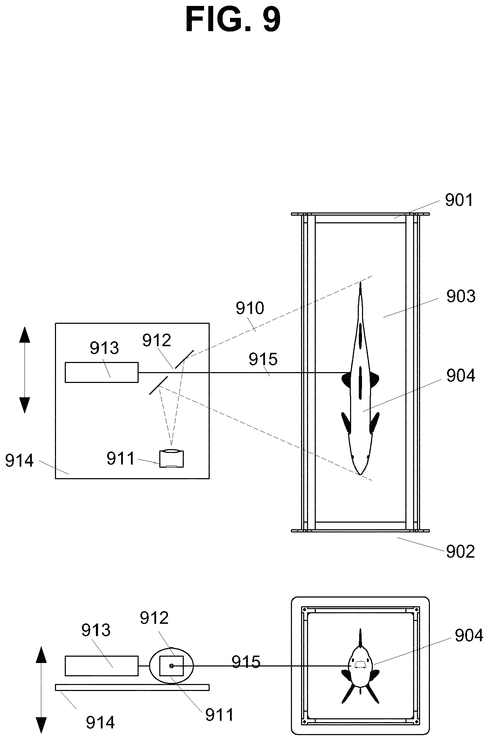

One implementation of the invention with laser removal arrangement **914** is shown in Fig. 9. A fish **904** enters the system through the entrance **901** and is temporarily constrained from leaving through the exit **902.** An image of the surface of the fish **910** is detected by optical detector **911.** A dichroic mirror **912** or a full reflector with a central opening is used for imaging. When a parasite is located, the system, optical radiation **915** from laser **913** is directed at the parasite through a turning mirror. A brief pulse of laser radiation **915** destroys the parasite.

Since the parasites will be removed in a limited volume of water, it is practical to collect parasites when they either fall off due to fatal injury or remove themselves due to discomfort. In either case, they do not re-enter the main area of the aquaculture facility again.

### Parameter Summary

Values for preferred, more preferred and most preferred parameters discussed in this disclosure are summarized in the following table.

| Optical detection and localization | | Preferred Low | More Preferred Low | Most Preferred Low | Nominal | Most Preferred High | More Preferred High | Preferred High | Units |
|---|---|---|---|---|---|---|---|---|---|
| Optical excitation wavelength | i | 250 | 300 | 350 | 395 | 400 | 600 | 700 | nm |
| Optical fluorescence wavelength | i | 300 | 400 | 450 | 525 | 600 | 700 | 900 | nm |

| | | | | | | | | | |
|---|---|---|---|---|---|---|---|---|---|
| Acoustic removal | | Preferred Low | More Preferred Low | Most Preferred Low | Nominal | Most Preferred High | More Preferred High | Preferred High | Units |
| Transducer f-number | i | 0.6 | | 0.7 | 0.83 | 0.9 | | 1.2 | - |
| Transducer focal length (Distance to the fish) | i | 10 | | 28 | 50 | 72 | | 100 | mm |
| Transducer diameter | d | 16.7 | | 40 | 60 | 80 | | 83.3 | mm |
| Operating frequency | i | 1 | 2 | 4 | 8 | 12 | 16 | 20 | Mhz |
| Focal Volume half-length | d | 0.1 | | 0.3 | 0.20 | 0.16 | | 0.5 | mm |
| Focal Volume radius | d | 0.05 | | 0.19 | 0.11 | 0.08 | | 0.5 | mm |
| Focal volume | d | 0.00079 | | 0.0340 | 0.008 | 0.003 | | 0.393 | mm³ |
| Heat capacity (like water) | i | | | | 4.20 | | | | mJ / K / mm³ |
| Temperature rise for discomfort | i | | | 25 | 50 | 75 | | | K |
| Temperature rise for destruction | i | | | 250 | 500 | 750 | | | K |
| Energy in parasite for discomfort | d | | | 3.57 | 1.6 | 1.0 | | | mJ |
| Energy in parasite for destruction | d | | | 35.72 | 16.0 | 10.1 | | | mJ |
| Nominal attenuation coefficient | i | | | | 0.054 | | | | dB / mm / Mhz |
| Energy in water for discomfort | d | | | 108 | 67 | 57 | | | mJ |
| Energy in water for destruction | d | | | 1074 | 670 | 570 | | | mJ |
| Pulse duration | i | 0.000 | 3 | 10 | 100 | 100 | 300 | 1000 | ms |
| Power in water for dioscomfort | d | | | 10.8 | 0.67 | 0.57 | | | W |
| Power in water for destruction | d | | | 107.4 | 6.7 | 5.7 | | | W |
| Intensity at focus, discomfort | d | | | 95.2 | 17.6 | 28.3 | | | W / mm² |
| Intensity at focus, destruction | d | | | 947 | 176 | 283 | | | W / mm² |

| | | | | | | | | | |
|---|---|---|---|---|---|---|---|---|---|
| Optical removal | | Preferred Low | More Preferred Low | Most Preferred Low | Nominal | Most Preferred High | More Preferred High | Preferred High | Units |
| Optical wavelength | i | 250 | 350 | 500 | 532 | 600 | 700 | 800 | nm |
| Beam quality | i | Single transverse mode TEMoo | | | | | | | - |
| Focal Volume radius | i | 0.1 | | 0.2 | 0.4 | 0.6 | | 1 | mm |
| Rayleigh range | d | 126 | | 251 | 945 | 1885 | | 3927 | mm |
| Focal volume depth | i | 0.1 | | 0.2 | 0.25 | 0.3 | | 0.5 | mm |
| Focal voilume | d | 0.003 | | 0.03 | 0.13 | 0.34 | | 1.57 | mm³ |
| Heat capacity (like water) | i | | | | 4.20 | | | | mJ/K/mm³ |
| Temperature rise for discomfort | i | | | 25 | 50 | 75 | | | K |
| Temperature rise for destruction | i | | | 250 | 500 | 750 | | | K |
| Energy in parasite for discomfort | d | | | 2.6 | 26.4 | 107 | | | mJ |
| Energy in parasite for destruction | d | | | 26 | 264 | 1069 | | | mJ |
| Pulse duration | i | 100 | 200 | 300 | 500 | 700 | 1000 | 2000 | ms |
| Power iin water for dioscomfort | d | | | 8.8 | 53 | 153 | | | mW |
| Power in water for destruction | d | | | 88 | 528 | 1527 | | | mW |
| Intensity at focus, discomfort | d | | | 0.07 | 0.11 | 0.14 | | | W/mm² |
| Intensity at focus, destruction | d | | | 0.70 | 1.05 | 1.35 | | | W/mm² |

| | | | | | | | | | |
|---|---|---|---|---|---|---|---|---|---|
| i independent parameters d derived parameters | | | | | | | | | |

### Examples

The following tests were conducted on either live or recently deceased parasites that were not attached to a host fish. However, it will be apparent to one skilled in both physics and fish behavior that the basic mechanisms for parasite destruction and removal are essentially the same for both attached and isolated parasites. The major difference is how the fish will react to the process. It is necessary in a preferred embodiment that the fish do not have any negative reaction to the removal process that would teach them to avoid the system.

### Fluorescence

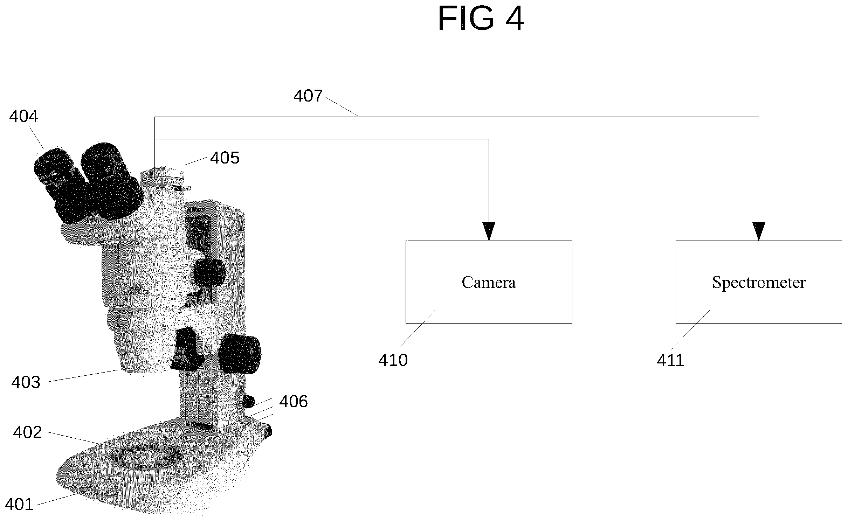

Referring to Fig. 4, the inventor has demonstrated this using a standard inspection microscope **401.** In practice, the fluorescence must be relatively strong to be useful so high sensitivity fluorescence detection is not necessary. A parasite sample is placed in the focal plane **402** and illuminated by a near UV source **406.** LED sources with wavelength between 365 and 395nm were used to excite fluorescence in L. salmonis and C. elongatus. A low-pass filter (also known as a long-pass filter) **403** is placed between the sample and the microscope which excludes the excitation wavelengths but passes the fluorescence wavelengths. The inventor used either Schott glass filters such as GG435 or dielectric filters with center frequency at 510nm for these parasites. A reticle in the eyepiece **404** allows positioning the relevant part of the parasite in the center of the image. The inspection microscope contains an auxiliary imaging port **405** where other instrumentation may be attached. The inventor has imaged parasites using a CCD camera **410** while under near UV illumination. The inventor also attached one end of an optical fiber **407** to the auxiliary port and the other end to a compact fiber spectrometer **411** which enables measurement of the fluorescence spectrum. By suitable adjustment of the magnification in the microscope, the fluorescence from any area of interest of the parasite may be measured and recorded as an image and/or as a spectrum.

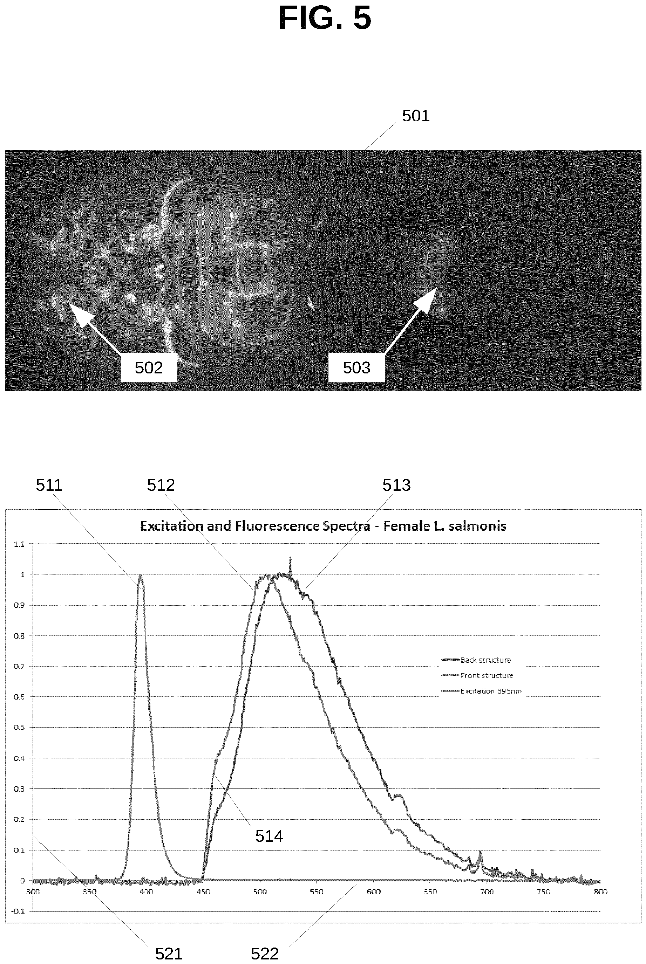

An example of measurement results obtained by the inventor for L. salmonis is shown in Fig.5. In this example, the parasite is illuminated at 395nm. An image of the fluorescence is shown in the upper picture **501.** Strong fluorescence is obtained from structures **502** toward the front of the parasite and a less intense fluorescence from an area **503** toward the back of the parasite. The normalized intensity **521** is plotted as function of wavelength **522.** The excitation spectrum **511** and fluorescence spectrum from the front part of the parasite **512** and from the rear of the parasite **513** are shown in the figure. Both fluorescence spectra have a cutoff **514** at about 400nm due to the optical low-pass filter. It is evident that there is some difference in the fluorescence from different parts of the parasite. Similar measurements of C. elongatus do not show this difference.

### Acoustic destruction

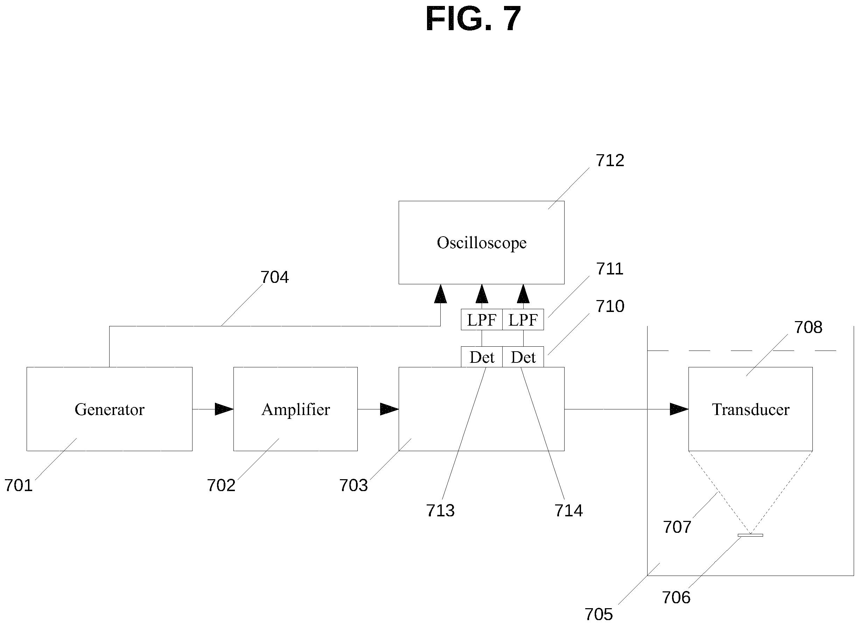

Fig 7 depicts a laboratory test setup used to demonstrate that high intensity acoustic radiation may be used to damage parasites in such a way as to avoid injury to the host fish.

We used a transducer **708** produced by Sonic Concepts (Bothell, WA, USA) with an active diameter of 60mm, a focal length of 50mm, a corresponding f-number of 0.83 and a fundamental frequency of about 2.5MHz. The transducer was operated at its third harmonic frequency which in this case was 8.06MHz in order to reduce the acoustic wavelength. The third harmonic is not a precise multiple of the fundamental frequency. A suitable impedance matching network was used to impedance match the transducer to a laboratory radio-frequency (RF) power amplifier at the third harmonic frequency. The RF power amplifier could deliver up to 150 watts into the transducer. The manufacturer specified that the transducer efficiency at the third harmonic frequency was about 80%.

The transducer was placed in a water tank filled with water **705.** Acoustic radiation **707** was incident on a sample under study in the focal plane **706.** An arbitrary waveform generator **701** was used to drive a high power radio-frequency amplifier **702** to produce the desired frequency, power level and pulse duration. The output of the amplifier was passed through a dual directional coupler **703** which allowed the measurement of forward power **713** into and reflected power **714** from the transducer. A crystal detector **710** and low-pass filter **711** on each port were used to produce a voltage proportional to the forward and reflected power. Each pulse produced by the arbitrary waveform generator was accompanied by a synchronizing pulse **704** which triggered an oscilloscope. The voltages corresponding to the forward and reflected power from the directional coupler were recorded for each pulse to verify the incident power and to insure that this power was in fact being coupled into the transducer and thus into the water. Some power is lost in the matching network and the transducer itself which results in the overall transducer efficiency.

The acoustic wavelength at 8.06MHz is about 0.19mm. The focal diameter is 0.21mm (FWHM) and the focal depth is 0.34mm or 0.17mm on each side of the focal plane.

We initially placed isolated samples of L. salmonis and C. elongatus in the focal plane and observed severe tissue ablation with 200ms pulses at 100 watts into the transducer corresponding to about 80 watts into the water. Damage results from about 16 joules in the focal spot with corresponding fluence of about 500 J/mm² and irradiance of about 2500W/mm². The observations confirm that tissue damage occurs on the top surface but not on the bottom surface of the parasite as desired.

The precise mechanism for tissue destruction in these tests could not be determined with the available equipment. However, an irradiance of 2500W/ mm² at 8MHz is theoretically sufficient to cause cavitation damage. The presence of the parasite and its internal structures can readily serve as the necessary nucleation sites for cavitation.

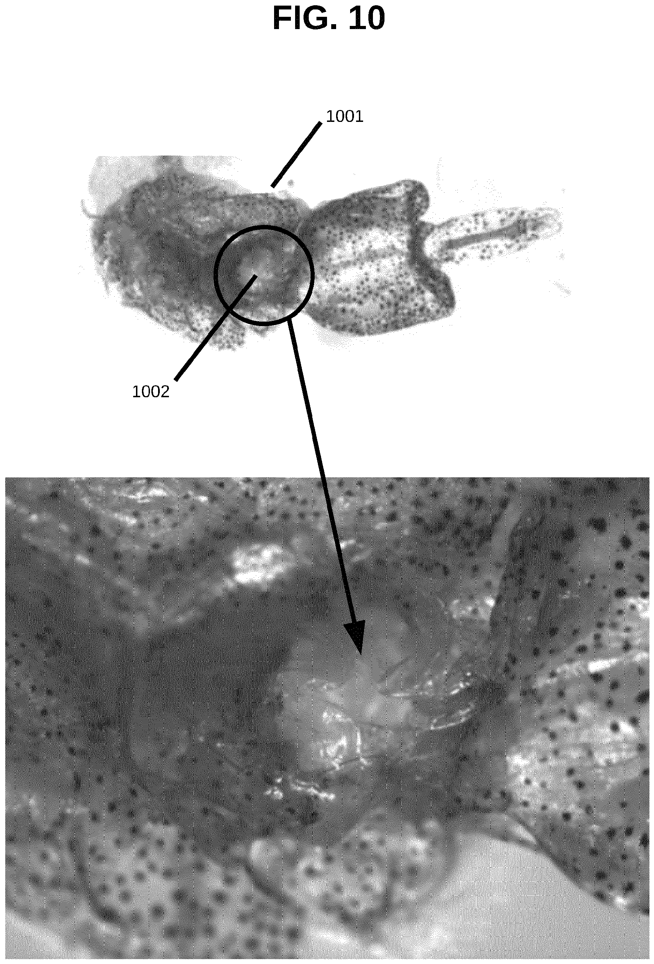

An example of significant tissue ablation is shown in Fig. 10 for a sample of the parasite L. salmonis with 16J incident energy. This kind of damage is visually obvious but is more than what is necessary to kill the parasite. The parasites in these tests were typically 4 to 8mm in diameter. The damaged areas were typically 10-20% of the diameter of the smallest parasite or on the order of 0.4 to 0.8mm diameter. Thus lateral aiming was not very difficult in comparison with the required focusing accuracy.

It is expected that the parasite will experience fatal internal damage before obvious tissue ablation occurs. We estimate that parasites will be removed with incident energy on the order of 1 to 10 joules. The following parameters are typical of the later tests: pulse duration is 100 ms, power into the water from the transducer is 8 watts, and area of the focal region 0.034mm². From these, one can estimate: input energy is 0.8 J, intensity at the focus 235 watts/mm2, and the energy deposited in the parasite 248 mJ. The focused intensity is less than the cavitation threshold for water at 8MHz. The deposited energy in this example is about 100 times more than the theoretical minimum required and is certain to kill the parasite. The focal diameter is 0.21mm which is much less than the dimensions of typical parasites so the damage to the parasite is local.

We intend to further refine the operating parameters to find the lowest acoustic power and energy inputs which reliably kill the parasite and thus minimize the possibility of injury or discomfort to the fish. We intend to observe this removal process on living fish for any sign of distress in the fish.

### Auto-focusing

When using acoustic energy to destroy parasites, it is important to accurately focus the acoustic radiation on the top surface of the parasite so that the parasite is destroyed without any injury or discomfort to the fish. As explained above, the fish will experience minimal stress if there is no physical contact with the fish during treatment. There is therefore the possibility of limited movement of the fish during inspection and treatment. We intend to implement some method of auto-focusing so that the acoustic transducer can follow the movements of the fish in the direction of radiation (z-axis).

A convenient way to do this is to use the same transducer for both autofocusing and then parasite removal. The transducer may be operated in a low-power, short pulse, high repetition rate mode to locate the correct distance to the surface of the fish using the same apparatus as shown in Fig. 7. When ready, the transducer can then be switched rapidly to a high power, single pulse mode to destroy the parasite.

To demonstrate this, we used a transducer with 50mm radius of curvature to transmit 1 microsecond long pulses of an 8.06MHz sinusoidal signal with a repetition period of 300 microseconds corresponding to a repetition rate of about 3.3kHz. The round-trip (i.e. 100mm) transit time for an acoustic pulse reflected from a target is about 67 microseconds. The signal from the power amplifier is directed through a dual directional coupler and into the transducer. The reflected signal from the transducer is observed from the appropriate port of the dual directional coupler. The transducer is not perfectly impedance matched to the driving impedance so one gets a prompt reflection from the 1 microsecond driving pulse and then another signal delayed by 67 microseconds which is the reflection from the target. A thick (e.g. 1 cm) piece of salmon with skin attached was used as a target. The transducer was moved in 50 micrometer increments through the focal region and the reflected power recorded.

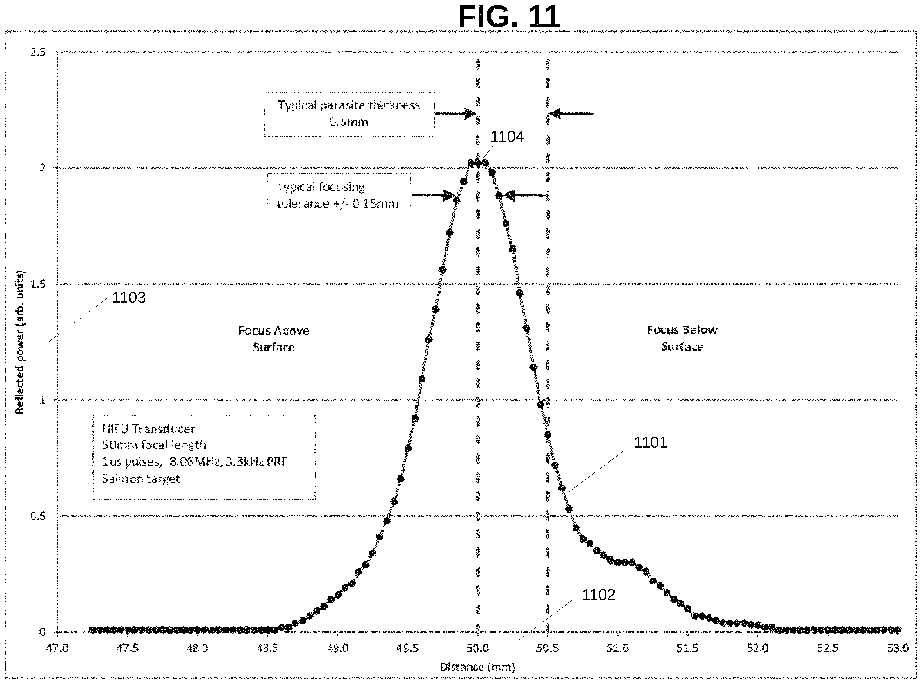

The results are shown in Fig. 11. The power reflected from the target **1101** is plotted as a function of distance on the x-axis **1102** in units of millimeters and on the y-axis **1103** in arbitrary units. The peak occurs at the focal distance of 50mm. The width of the peak is +/- 50 micrometers and one can easily distinguish the peak within +/- 150 micrometers. This is small compared with a typical parasite thickness of 0.5 millimeter.

This approach is distinct from normal acoustic ranging which relies on a time measurement. Here, it is possible to use a control loop to keep the reflected intensity maximized and thus maintain the transducer at the correct distance from the fish despite movements of the fish.

## Claims

1. A method for monitoring and control of ectoparasites (205) of the genus Caligus or Lepeophtheiris on fish (202) in an aquaculture facility, wherein the fish is any of the salmonid species including without limitation Atlantic salmon (Salmo salar), **characterized in that** monitoring and control are based on detection of optical fluorescence from said ectoparasites and comprising the steps of
a. optically illuminating a fish potentially infested with ectoparasites using an optical excitation source (220) with spectral composition capable of exciting optical fluorescence of anatomical structures in said ectoparasites in the absence of any artificially added fluorophore, said optical excitation source arranged to emit optical radiation having a wavelength in the range of approximately 360-400nm.
b. causing optical fluorescence (221) to be emitted from the anatomical structures of an ectoparasite that is present in the illuminated area,
c. detecting said optical fluorescence, using one or more optical detectors (223) together with appropriate spectral filters (222) arranged to detect substantially only the optical fluorescence from said anatomical structures of said one or more ectoparasites,
d. producing an electronic signal representing said optical fluorescence, and
e. communicating said electronic signal to a recording and display means,
f. thereby detecting the presence or absence of ectoparasites on said fish in said illuminated area and providing necessary information for documentation and control of said ectoparasites.

2. The method according to claim 1, **characterized in that** the fish is illuminated and the fluorescence of the anatomical structures of the parasites are detected while the fish is under water.

3. The method according to one of the preceding claims, **characterized in that** the location of the ectoparasite is determined in three dimensions.

4. The method according to one of the preceding claims **characterized in that** the optical excitation source is temporally modulated and optical fluorescence is detected in synchrony with the optical source modulation for the purpose of separating undesired signals due to substantially constant background illumination from desired signals due to optical fluorescence from ectoparasites, comprising the steps of:
a. temporally varying the optical power from the optical illumination source thus causing the optical fluorescence from any ectoparasites that are present to have the same temporal variation as the optical excitation source,
b. synchronously detecting said optical fluorescence, and
c. processing said detected signals to reduce or eliminate non-synchronous signals.

5. The method according to one of the preceding claims **characterized in that** the method further comprises the step of storing information about the position of an ectoparasites as a function of time to estimate its future position, comprising the steps of:
a. storing the location of at least one detected ectoparasite together with a time stamp in a recording means for a sequence of observations over a duration of interest,
b. retrieving said sequence of stored location records,
c. analyzing said sequence to estimate the position of the parasite at any future time of interest

6. The method according to one of the preceding claims, **characterized in that** an ectoparasite is damaged and subsequently removed from a fish using acoustic radiation, where the method further comprises the steps of:
a. detecting and localizing an ectoparasite (205) on a fish (202) according to the method of one of claims 1-5,
b. using an acoustic transducer with a suitable f-number to produce acoustic radiation in water in the form of a converging wave (602) reaching a minimum diameter at a focal plane (603) and with a focal point defined by the point of maximum acoustic intensity in the focal plane,
c. positioning said acoustic transducer with respect to an ectoparasite so that the focal point of said transducer is substantially at the top surface of the ectoparasite and said acoustic radiation is propagating into the tissue of the ectoparasite,
d. operating said transducer with suitable values of acoustic frequency, acoustic power and pulse duration such that energy absorbed in the tissue of a ectoparasite from the incident acoustic radiation is sufficient to damage or kill the ectoparasite without causing damage to the fish,
e. resulting in removal of the ectoparasite from the fish.

7. The method according to claim 6 **characterized in that** the acoustic transducer has a an f-number in the range 0.6 to 1.1 and most preferably in the range 0.7 to 0.9.

8. The method according to one of claims 6 or 7 **characterized in that** the energy deposited into the tissue of the ectoparasite from the acoustic radiation is in the range of from 1mJ to 100mJ.

9. The method according to one of claims 6-8 **characterized in that** the distance from the acoustic transducer to the top surface of the parasite is actively controlled to maintain the desired focal point of the acoustic radiation at the top surface of the parasite for the duration of the destruction of the parasite and thereby compensate for possible motion of the host fish along the longitudinal axis of the acoustic radiation comprising the steps of:
a. emitting a sequence of short, low power acoustic pulses from the transducer towards the parasite,
b. detecting the reflected acoustic power from the parasite from said short, low power acoustic pulses using an acoustic transducer element, and
c. continuously adjusting the distance from the transducer to the parasite to maximize said reflected acoustic power

10. The method according to one of claims 1-5, **characterized in that** an ectoparasite is damaged and subsequently removed from a fish using optical radiation, where the method further comprises the steps of
a. detecting and localizing an ectoparasite (205) on a fish (202) according to the method of one of claims 1-5,
b. using a laser to produce optical radiation in the water said laser producing optical radiation in water in the form of a substantially collimated wave with a beam diameter less than the lateral dimensions of the ectoparasite,
c. positioning said laser with respect to an ectoparasite so that optical radiation is directed into the tissue of the ectoparasite,
d. operating said laser with suitable values of optical frequency, optical power and pulse duration such that energy absorbed in the tissue of a ectoparasite from the incident optical radiation is sufficient to damage or kill the ectoparasite without causing damage to the fish,
e. resulting in removal of the ectoparasite from the fish.

11. The method according to claim 10 **characterized in that** the energy deposited into the tissue of the ectoparasite from the incident optical radiation is in the range of from 2mJ to 2000mJ.

12. A system for monitoring and control of undesirable ectoparasites (205) of the genus Caligus or Lepeophtheiris on fish (202) in an aquaculture facility, wherein the fish is any of the salmonid species including without limitation Atlantic salmon (Salmo salar), **characterized in that** the system comprises
a. a constrained volume (101) containing the fish potentially with ectoparasites,
b. one or more optical excitation sources (220) with spectral composition capable of exciting fluorescence in anatomical structures of said ectoparasites while said fish is under water, said optical excitation source arranged to emit optical radiation having a wavelength in the range of approximately 360-400nm,
c. one or more optical detectors (223) together with appropriate spectral filters (222) arranged to detect substantially only the optical fluorescence from the anatomical structures of said ectoparasites while said fish is under water,
d. a processor arranged to receive a signal from the optical detectors and derive the position of the ectoparasite on the fish in 3 dimensions,
e. a communication means to communicate said electronic signal to a recording means, to record the presence or absence of ectoparasites and the location of any detected ectoparasites on said fish in said illuminated area.

13. The system according to Claim 12 for inflicting damage to and subsequent removal of said ectoparasite **characterized in that** the system further-comprises:
a. an acoustic transducer (601), said acoustic transducer arranged to deliver acoustic power (602) into the tissue of the ectoparasite (604), said acoustic power capable of inflicting damage to the ectoparasite without inflicting damage to the fish.

14. The system according to claim 13 **characterized in that** the acoustic transducer has an f-number is in the range 0.6 to 1.1 and most preferably in the range 0.7 to 0.9.

15. The system according to Claim 12 for inflicting damage to and subsequent removal of said ectoparasite **characterized in that** the system further comprises:
a. a laser (913) with suitable optical frequency, optical power and pulse duration such that energy absorbed in the tissue of an ectoparasite from the incident optical radiation is sufficient to damage or kill the ectoparasite without causing damage to the fish

## Patentansprüche

1. Verfahren zur Überwachung und Kontrolle von Ektoparasiten (205) der Gattung Caligus oder Lepeophteiris an Fischen (202) in einer Aquakultureinrichtung, wobei es sich bei den Fischen um irgendeine Salmonidenspezies handelt, die ohne Einschränkung atlantischen Lachs (Salmo salar) umfasst, **dadurch gekennzeichnet, dass** die Überwachung und Kontrolle auf einer Detektion von den Ektoparasiten ausgehender optischer Fluoreszenz beruht und folgende Schritte umfasst:
a. optisches Beleuchten eines gegebenenfalls mit Ektoparasiten befallenen Fisches unter Verwendung einer optischen Anregungsquelle (220) mit einer spektralen Zusammensetzung, die in der Lage ist, eine optische Fluoreszenz von anatomischen Strukturen in den Ektoparasiten in Abwesenheit irgendeines künstlich hinzugefügten Fluorophors anzuregen, wobei die optische Anregungsquelle dazu eingerichtet ist, optische Strahlung mit einer Wellenlänge im Bereich von ungefähr 360 - 400 nm zu emittieren,
b. Bewirken, dass optische Fluoreszenz (221) von den anatomischen Strukturen eines Ektoparasiten emittiert wird, der in dem Beleuchtungsbereich vorhanden ist,
c. Detektieren der optischen Fluoreszenz unter Verwendung eines optischen oder mehrerer optischer Detektoren (223) zusammen mit geeigneten Spektralfiltern (222), die dazu eingerichtet sind, im Wesentlichen nur die von den anatomischen Strukturen des einen oder der mehreren Ektoparasiten ausgehende optische Fluoreszenz zu detektieren,
d. Erzeugen eines elektronischen Signals, das die optische Fluoreszenz repräsentiert, und
e. Übermitteln des elektronischen Signals an eine Aufzeichnungs- und Anzeigeeinrichtung,
f. wodurch das Vorhandensein oder Nichtvorhandensein von Ektoparasiten am Fisch in dem beleuchteten Bereich detektiert wird und notwendige Informationen zur Dokumentation und Kontrolle der Ektoparasiten bereitgestellt werden.

2. Verfahren nach Anspruch 1, **dadurch gekennzeichnet, dass** der Fisch beleuchtet und die Fluoreszenz der anatomischen Strukturen der Parasiten erfasst wird, während sich der Fisch unter Wasser befindet.

3. Verfahren nach einem der vorhergehenden Ansprüche, **dadurch gekennzeichnet, dass** die räumliche Stelle des Ektoparasiten in drei Dimensionen bestimmt wird.

4. Verfahren nach einem der vorhergehenden Ansprüche, **dadurch gekennzeichnet, dass** die optische Anregungsquelle zeitweise moduliert wird und die optische Fluoreszenz in Synchronität mit der Modulation der optischen Quelle detektiert wird, um ungewünschte Signale, die von im Wesentlichen konstanter Hintergrundbeleuchtung herrühren, von gewünschten Signalen zu trennen, die von der von Ektoparasiten ausgehenden optischen Fluoreszenz herrühren, die folgenden Schritte umfassend:
a. zeitweises Verändern der von der optischen Beleuchtungsquelle ausgehende optische Leistung, so dass bewirkt wird, dass die von irgendwelchen vorhandenen Ektoparasiten ausgehende optische Fluoreszenz dieselbe zeitliche Veränderung hat wie die optische Anregungsquelle,
b. synchrones Detektieren der optischen Fluoreszenz, und
c. Verarbeiten der Detektionssignale, um nicht synchrone Signale zu reduzieren oder zu eliminieren.

5. Verfahren nach einem der vorhergehenden Ansprüche, **dadurch gekennzeichnet, dass** das Verfahren darüber hinaus den Schritt umfasst, Informationen über die Position eines Ektoparasiten in Abhängigkeit von Zeit zu speichern, um seine zukünftige Position zu schätzen, folgende Schritte umfassend:
a. Speichern der räumlichen Stelle mindestens eines detektierten Ektoparasiten für eine Sequenz von Beobachtungen über eine Dauer von Interesse zusammen mit einem Zeitstempel in einer Aufzeichnungseinrichtung,
b. Abrufen der Sequenz gespeicherter Stellenaufzeichnungen,
c. Analysieren der Sequenz, um die Position des Parasiten zu irgendeiner zukünftigen Zeit von Interesse zu schätzen.

6. Verfahren nach einem der vorhergehenden Ansprüche, **dadurch gekennzeichnet, dass** ein Ektoparasit unter Verwendung akustischer Strahlung geschädigt und anschließend aus einem Fisch entfernt wird, wobei das Verfahren darüber hinaus die folgenden Schritte umfasst:
a. Detektieren und Lokalisieren eines Ektoparasiten (205) an einem Fisch (202) nach dem Verfahren eines der Ansprüche 1 bis 5,
b. Verwenden eines akustischen Wandlers mit einer geeigneten f-Zahl, um akustische Strahlung in Wasser in Form einer konvergierenden Welle (602) zu erzeugen, die einen Mindestdurchmesser auf einer Brennebene (603) und mit einem Brennpunkt erreicht, der durch den Punkt maximaler akustischer Stärke in der Brennebene definiert ist,
c. Positionieren des akustischen Wandlers in Bezug auf den Ektoparasiten, so dass sich der Brennpunkt des Wandlers im Wesentlichen an der Oberfläche des Ektoparasiten befindet und sich die akustische Strahlung in das Gewebe des Ektoparasiten hinein ausbreitet,
d. derartiges Betreiben des Wandlers mit geeigneten akustischen Frequenz-, akustischen Leistungs- und Impulsdauerwerten , dass in das Gewebe eines Ektoparasiten aus der einfallenden akustischen Strahlung aufgenommene Energie ausreicht, den Ektoparasiten zu schädigen oder zu töten, ohne einen Schaden am Fisch zu bewirken,
e. was zur Entfernung des Ektoparasiten aus dem Fisch führt.

7. Verfahren nach Anspruch 6, **dadurch gekennzeichnet, dass** der akustische Wandler eine f-Zahl im Bereich von 0,6 bis 1,1 und am bevorzugtesten im Bereich von 0,7 bis 0,9 aufweist.

8. Verfahren nach Anspruch 6 oder 7, **dadurch gekennzeichnet, dass** die in das Gewebe des Ektoparasiten eingebrachte Energie aus der akustischen Strahlung im Bereich von 1 mJ bis 100 mJ liegt.

9. Verfahren nach einem der Ansprüche 6 bis 8, **dadurch gekennzeichnet, dass** der Abstand vom akustischen Wandler zur Oberfläche des Parasiten aktiv gesteuert wird, um den gewünschten Brennpunkt der akustischen Strahlung auf der Oberfläche des Parasiten für die Dauer der Zerstörung des Parasiten aufrechtzuerhalten und dadurch eine mögliche Bewegung des Wirtsfisches entlang der Längsachse der akustischen Strahlung auszugleichen, die folgenden Schritte umfassend:
a. Emittieren einer Sequenz kurzer akustischer Impulse geringer Leistung vom Wandler zum Parasiten,
b. Detektieren der vom Parasiten von den kurzen akustischen Impulsen geringer Leistung reflektierte akustische Leistung unter Verwendung eines akustischen Wandler-Elements, und
c. kontinuierliches Anpassen der Distanz vom Wandler zum Parasiten, um die reflektierte akustische Leistung zu maximieren.

10. Verfahren nach einem der Ansprüche 1 bis 5, **dadurch gekennzeichnet, dass** ein Ektoparasit unter Verwendung optischer Strahlung geschädigt und anschießend aus einem Fisch entfernt wird, wobei das Verfahren darüber hinaus die folgenden Schritte umfasst:
a. Detektieren und Lokalisieren eines Ektoparasiten (205) an einem Fisch (202) nach dem Verfahren eines der Ansprüche 1 bis 5,
b. Verwenden eines Lasers, um optische Strahlung im Wasser zu erzeugen, wobei der Laser optische Strahlung in Wasser in Form einer im Wesentlichen kollimierten Welle mit einem Strahldurchmesser erzeugt, der kleiner ist als die seitlichen Abmessungen des Ektoparasiten,
c. Positionieren des Lasers in Bezug auf einen Ektoparasiten, so dass die optische Strahlung in das Gewebe des Ektoparasiten hinein gerichtet ist,
d. derartiges Betreiben des Lasers mit geeigneten optische Frequenz-, optischen Leistungs- und Impulsdauerwerten, dass in das Gewebe eines Ektoparasiten aus der eingefallenen optischen Strahlung aufgenommene Energie ausreicht, den Ektoparasiten zu schädigen oder zu töten, ohne einen Schaden am Fisch zu bewirken,
e. was zur Entfernung des Ektoparasiten aus dem Fisch führt.

11. Verfahren nach Anspruch 10, **dadurch gekennzeichnet, dass** die in das Gewebe des Ektoparasiten eingebrachte Energie aus der optischen Strahlung im Bereich von 2 mJ bis 2000 mJ liegt.

12. System zur Überwachung und Kontrolle von unerwünschten Ektoparasiten (205) der Gattung Caligus oder Lepeophteiris an Fischen (202) in einer Aquakultureinrichtung, wobei es sich bei den Fischen um irgendeine Salmonidenspezies handelt, die ohne Einschränkung atlantischen Lachs (Salmo salar) umfasst, **dadurch gekennzeichnet, dass** das System umfasst:
a. ein begrenztes Volumen (101), das den Fisch, gegebenenfalls mit Ektoparasiten, enthält,
b. eine oder mehrere optische Anregungsquellen (220) mit einer spektralen Zusammensetzung, die in der Lage ist, eine Fluoreszenz in anatomischen Strukturen des Ektoparasiten anzuregen, während sich der Fisch unter Wasser befindet, wobei die optische Anregungsquelle dazu eingerichtet ist, optische Strahlung mit einer Wellenlänge im Bereich von ungefähr 360 - 400 nm zu emittieren,
c. einen oder mehrere optische Detektoren (223) zusammen mit geeigneten Spektralfiltern (222), die dazu eingerichtet sind, im Wesentlichen nur die von den anatomischen Strukturen der Ektoparasiten ausgehende optische Fluoreszenz zu detektieren, während sich der Fisch unter Wasser befindet,
d. einen Prozessor, der dazu eingerichtet ist, ein Signal von den optischen Detektoren zu empfangen und die Position des Ektoparasiten am Fisch in 3 Dimensionen abzuleiten,
e. eine Kommunikationseinrichtung, um das elektronische Signal an eine Aufzeichnungseinrichtung zu übermitteln, um das Vorhandensein oder Nichtvorhandensein von Ektoparasiten und die räumliche Stelle irgendwelcher am Fisch in dem beleuchteten Bereich detektierter Ektoparasiten aufzuzeichnen.

13. System nach Anspruch 12, um dem Ektoparasiten Schaden zuzufügen und ihn anschließend zu entfernen, **dadurch gekennzeichnet, dass** das System darüber hinaus umfasst:
a. einen akustischen Wandler (601), wobei der akustische Wandler dazu eingerichtet ist, akustische Leistung (602) in das Gewebe des Ektoparasiten (604) einzubringen, wobei die akustische Leistung in der Lage ist, dem Ektoparasiten Schaden zuzufügen, ohne dem Fisch Schaden zuzufügen.

14. System nach Anspruch 13, **dadurch gekennzeichnet, dass** der akustische Wandler eine f-Zahl im Bereich von 0,6 bis 1,1 und am bevorzugtesten im Bereich von 0,7 bis 0,9 hat.

15. System nach Anspruch 12, um dem Ektoparasiten Schaden zuzufügen und ihn anschließend zu entfernen, **dadurch gekennzeichnet, dass** das System darüber hinaus umfasst:
a. einen Laser (913) mit geeigneter optischer Frequenz, optischer Leistung und Impulsdauer, so dass in das Gewebe eines Ektoparasiten aus der eingefallenen optischen Strahlung aufgenommene Energie ausreicht, den Ektoparasiten zu schädigen oder zu töten, ohne einen Schaden am Fisch zu bewirken.

## Revendications

1. Procédé de contrôle et de lutte contre des ectoparasites (205) du genre Caligus ou Lepeophtheirus sur un poisson (202) dans une installation d'aquaculture, dans lequel le poisson est l'un quelconque de l'espèce salmonidé y compris, sans limitation, le saumon de l'Atlantique (*Salmo salar*),
**caractérisé en ce que** le contrôle et la lutte sont basés sur une détection d'une fluorescence optique issue desdits ectoparasites et comprenant les étapes suivantes
a. l'illumination optique d'un poisson potentiellement infesté par des ectoparasites à l'aide d'une source d'excitation optique (220) avec une composition spectrale capable d'exciter une fluorescence optique de structures anatomiques dans lesdits ectoparasites en l'absence de tout fluorophore ajouté artificiellement, ladite source d'excitation optique étant agencée pour émettre un rayonnement optique ayant une longueur d'onde dans la plage d'approximativement 360 à 400 nm,
b. le fait de provoquer l'émission d'une fluorescence optique (221) depuis les structures anatomiques d'un ectoparasite qui est présent dans la zone illuminée,
c. la détection de ladite fluorescence optique, à l'aide d'un ou de plusieurs détecteurs optiques (223) conjointement avec des filtres spectraux appropriés (222) agencés pour ne détecter sensiblement que la fluorescence optique issue desdites structures anatomiques desdits un ou plusieurs ectoparasites,
d. la production d'un signal électronique représentant ladite fluorescence optique, et
e. la communication dudit signal électronique à un moyen d'enregistrement et d'affichage,
f. ainsi la détection de la présence ou de l'absence d'ectoparasites sur ledit poisson dans ladite zone illuminée et la fourniture d'informations nécessaires pour une documentation et une lutte contre lesdits ectoparasites.

2. Procédé selon la revendication 1, **caractérisé en ce que** le poisson est illuminé et la fluorescence des structures anatomiques des parasites est détectée pendant que le poisson est sous l'eau.

3. Procédé selon l'une des revendications précédentes, **caractérisé en ce que** l'emplacement de l'ectoparasite est déterminé en trois dimensions.

4. Procédé selon l'une des revendications précédentes, **caractérisé en ce que** la source d'excitation optique est temporellement modulée et la fluorescence optique est détectée en synchronisme avec la modulation de source optique dans le but de séparer des signaux indésirables dus à une illumination de fond sensiblement constante de signaux utiles dus à une fluorescence optique issue d'ectoparasites, comprenant les étapes suivantes :
a. la variation temporelle de la puissance optique issue de la source d'illumination optique, amenant ainsi la fluorescence optique issue de tout ectoparasite qui est présent à avoir la même variation temporelle que la source d'excitation optique,
b. la détection synchrone de ladite fluorescence optique, et
c. le traitement desdits signaux détectés pour réduire ou éliminer des signaux non synchrones.

5. Procédé selon l'une des revendications précédentes, **caractérisé en ce que** le procédé comprend en outre l'étape de stockage d'informations à propos de la position d'un ectoparasite en fonction du temps pour estimer sa position future, comprenant les étapes suivantes :
a. le stockage de l'emplacement d'au moins un ectoparasite détecté conjointement avec une estampille temporelle dans un moyen d'enregistrement pour une séquence d'observations sur une durée d'intérêt,
b. la récupération de ladite séquence d'enregistrements d'emplacement stockés,
c. l'analyse de ladite séquence pour estimer la position du parasite à tout instant d'intérêt futur.

6. Procédé selon l'une des revendications précédentes, **caractérisé en ce qu'**un ectoparasite est endommagé et ultérieurement éliminé d'un poisson à l'aide d'un rayonnement acoustique, où le procédé comprend en outre les étapes suivantes :
a. la détection et la localisation d'un ectoparasite (205) sur un poisson (202) selon le procédé de l'une des revendications 1 à 5,
b. l'utilisation d'un transducteur acoustique avec un nombre f convenable pour produire un rayonnement acoustique dans l'eau sous la forme d'une onde convergente (602) atteignant un diamètre minimal au niveau d'un plan focal (603) et avec un plan focal défini par le point d'intensité acoustique maximale dans le plan focal,
c. le positionnement dudit transducteur acoustique par rapport à un ectoparasite pour que le point focal dudit transducteur soit sensiblement au niveau de la surface de dessus de l'ectoparasite et que ledit rayonnement acoustique se propage dans le tissu de l'ectoparasite,
d. l'exploitation dudit transducteur avec des valeurs convenables de fréquence acoustique, de puissance acoustique et de durée d'impulsion pour que l'énergie absorbée dans le tissu d'un ectoparasite issue du rayonnement acoustique incident soit suffisante pour endommager ou tuer l'ectoparasite sans occasionner de dégâts sur le poisson,
e. l'aboutissement à une élimination de l'ectoparasite du poisson.

7. Procédé selon la revendication 6, **caractérisé en ce que** le transducteur acoustique a un nombre f dans la plage de 0,6 à 1,1 et de manière préférée entre toutes dans la plage de 0,7 à 0,9.

8. Procédé selon l'une des revendications 6 ou 7, **caractérisé en ce que** l'énergie déposée dans le tissu de l'ectoparasite issue du rayonnement acoustique est dans la plage de 1 mJ à 100 mJ.

9. Procédé selon l'une des revendications 6 à 8, **caractérisé en ce que** la distance du transducteur acoustique à la surface de dessus du parasite est activement régulée pour maintenir le point focal souhaité du rayonnement acoustique au niveau de la surface de dessus du parasite pendant la durée de la destruction du parasite et ainsi compenser un mouvement possible du poisson hôte le long de l'axe longitudinal du rayonnement acoustique comprenant les étapes suivantes :
a. l'émission d'une séquence de courtes impulsions acoustiques de faible puissance du transducteur vers le parasite,
b. la détection de la puissance acoustique réfléchie du parasite issue desdites courtes impulsions acoustiques de faible puissance à l'aide d'un élément transducteur acoustique, et
c. le réglage en continu de la distance du transducteur au parasite pour maximiser ladite puissance acoustique réfléchie.

10. Procédé selon l'une des revendications 1 à 5, **caractérisé en ce qu'**un ectoparasite est endommagé et ultérieurement éliminé d'un poisson à l'aide d'un rayonnement optique, où le procédé comprend en outre les étapes suivantes :
a. la détection et la localisation d'un ectoparasite (205) sur un poisson (202) selon le procédé de l'une des revendications 1 à 5,
b. l'utilisation d'un laser pour produire un rayonnement optique dans l'eau, ledit laser produisant un rayonnement optique dans l'eau sous la forme d'une onde sensiblement collimatée avec un diamètre de faisceau inférieur aux dimensions latérales de l'ectoparasite,
c. le positionnement dudit laser par rapport à un ectoparasite pour qu'un rayonnement optique soit dirigé dans le tissu de l'ectoparasite,
d. l'exploitation dudit laser avec des valeurs convenables de fréquence optique, de puissance optique et de durée d'impulsion pour que l'énergie absorbée dans le tissu d'un ectoparasite issue du rayonnement optique incident soit suffisante pour endommager ou tuer l'ectoparasite sans occasionner de dégâts sur le poisson,
e. l'aboutissement à une élimination de l'ectoparasite du poisson.

11. Procédé selon la revendication 10, **caractérisé en ce que** l'énergie déposée dans le tissu de l'ectoparasite issue du rayonnement optique incident est dans la plage de 2 mJ à 2 000 mJ.

12. Système de contrôle et de lutte contre des ectoparasites indésirables (205) du genre Caligus ou Lepeophtheirus sur un poisson (202) dans une installation d'aquaculture, dans lequel le poisson est l'un quelconque de l'espèce salmonidé y compris, sans limitation, le saumon de l'Atlantique (*Salmo salar*), **caractérisé en ce que** le système comprend
a. un volume restreint (101) contenant le poisson potentiellement infesté d'ectoparasites,
b. une ou plusieurs sources d'excitation optique (220) avec une composition spectrale capable d'exciter une fluorescence dans des structures anatomiques desdits ectoparasites pendant que ledit poisson est sous l'eau, ladite source d'excitation optique étant agencée pour émettre un rayonnement optique ayant une longueur d'onde dans la plage d'approximativement 360 à 400 nm,
c. un ou plusieurs détecteurs optiques (223) conjointement avec des filtres spectraux appropriés (222) agencés pour ne détecter sensiblement que la fluorescence optique issue des structures anatomiques desdits ectoparasites pendant que ledit poisson est sous l'eau,
d. un processeur agencé pour recevoir un signal des détecteurs optiques et dériver la position de l'ectoparasite sur le poisson en 3 dimensions,
e. un moyen de communication pour communiquer ledit signal électronique à un moyen d'enregistrement, pour enregistrer la présence ou l'absence d'ectoparasites et l'emplacement de tout ectoparasite détecté sur ledit poisson dans ladite zone illuminée.

13. Système selon la revendication 12, destiné à infliger un endommagement audit ectoparasite et à l'éliminer ultérieurement, **caractérisé en ce que** le système comprend en outre :
a. un transducteur acoustique (601), ledit transducteur acoustique étant agencé pour délivrer une puissance acoustique (602) dans le tissu de l'ectoparasite (604), ladite puissance acoustique étant capable d'infliger un endommagement à l'ectoparasite sans infliger d'endommagement au poisson.

14. Système selon la revendication 13, **caractérisé en ce que** le transducteur acoustique a un nombre f dans la plage de 0,6 à 1,1 et de manière préférée entre toutes dans la plage de 0,7 à 0,9.

15. Système selon la revendication 12, destiné à infliger un endommagement audit ectoparasite et à l'éliminer ultérieurement, **caractérisé en ce que** le système comprend en outre :
a. un laser (913) avec une fréquence optique, une puissance optique et une durée d'impulsion convenables pour que l'énergie absorbée dans le tissu d'un ectoparasite issue du rayonnement optique incident soit suffisante pour endommager ou tuer l'ectoparasite sans occasionner de dégâts sur le poisson.
